# EUROPEAN PATENT SPECIFICATION

(11) **EP 3 968 610 B1**
(45) Date of publication and mention of the grant of the patent: **18.12.2024**
(21) Application number: 20806492.3
(22) Date of filing: 23.04.2020
(51) Int. Cl.: H04L 67/1021, H04L 67/563

(54) **METHOD, DEVICE, AND SYSTEM FOR SELECTING MOBILE EDGE COMPUTING NODE**
VERFAHREN, VORRICHTUNG UND SYSTEM ZUR AUSWAHL EINES MOBILEN EDGE-COMPUTING-KNOTENS
PROCÉDÉ, DISPOSITIF ET SYSTÈME DE SÉLECTION D'UN NOEUD INFORMATIQUE EN PÉRIPHÉRIE DE RÉSEAU MOBILE

(30) Priority: 10.05.2019 CN 201910387587
(43) Date of publication of application: 16.03.2022
(73) Proprietor: Tencent Technology (Shenzhen) Company Limited, Shenzhen, Guangdong, 518057 (CN)
(72) Inventor: YOU, Zhiqiang, Shenzhen, Guangdong 518057 (CN); LOU, Jiajia, Shenzhen, Guangdong 518057 (CN)
(74) Representative: Eisenführ Speiser
(86) International application number: PCT/CN2020/086398
(87) International publication number: WO 2020/228505

(56) References cited:
- CN-A- 109 640 319
- CN-A- 109 640 319
- CN-A- 110 198 307
- CN-A- 110 198 363
- CN-A- 110 769 039
- US-A1- 2019 138 934
- FABIO GIUST ET AL: "ETSI White Paper No. 24 MEC Deployments in 4G and Evolution Towards 5G", 1 February 2019 (2019-02-01), pages 1 - 24, XP055732290, Retrieved from the Internet <URL:https://www.etsi.org/images/files/ETSIWhitePapers/etsi_wp24_MEC_deployment_in_4G_5G_FINAL.pdf> [retrieved on 20200921]

## Description

This application claims priority to Chinese Patent Application No. 201910387587.9, entitled "METHOD, DEVICE, AND SYSTEM FOR SELECTING MOBILE EDGE COMPUTING NODE", filed with the China National Intellectual Property Administration on May 10, 2019.

### FIELD

This application relates to the field of mobile communications, and in particular, to selection of a mobile edge computing node.

### BACKGROUND

With the development of science and technology, requirements of users for processing and transmission rates of communication services are increasingly high. Particularly, for a fifth-generation mobile communication technology (5G) mobile communication network, the requirement for a processing speed is higher. With the mobile edge computing, computing, storage, and processing and the like can be performed by using a nearby mobile access network, reducing latency. Therefore, a mobile terminal needs to be scheduled to a mobile edge computing (MEC) node which is located closest to the mobile terminal. Document CN 109 640 319 A (TENCENT TECH SHENZHEN CO LTD) 16 April 2019 (2019-04-16) aims at allocating a suitable MEC server to a terminal device.

### SUMMARY

A method, an apparatus, and a system for selecting a mobile edge computing node are provided according to embodiments of this application, to provide a solution for selecting a MEC node for a 5G mobile communication network which has not been developed in the conventional technology.

The embodiments of this application provide the following technical solutions.

According to an aspect, a method for selecting a MEC node is provided according to an embodiment of this application, which is performed by an edge cloud gateway. The edge cloud gateway is arranged in a system for selecting a MEC node, the system includes at least a user plane function, the edge cloud gateway, and a global server load balance. The method includes:
receiving, by the edge cloud gateway, a domain name request forwarded by the user plane function, a domain name in the domain name request being a preset service acceleration domain name or a destination address in the domain name request being an IP address of the global server load balance, or protocol port information in the domain name request meeting a preset protocol port requirement;
obtaining, based on the domain name request, an edge-application virtual IP (VIP) for interconnection between edge-application virtual Internets from the global server load balance;
returning a domain name response to a terminal by using the user plane function, the domain name response including at least the edge-application VIP;
receiving a service request forwarded by the user plane function, a destination address of the service request being the edge-application VIP; and
determining a mobile edge computing (MEC) processing server based on the service request and a preset routing policy, and routing the service request to the MEC processing server, where

the method further including:
   recording a request status of the domain name request, the request status representing a DNS request or a first HTTP DNS request,
where the obtaining, based on the domain name request, an edge-application VIP for interconnection between edge-application virtual Internets from the global server load balance comprises:
   transmitting, based on the domain name request, a second HTTP DNS request to the global server load balance, the second HTTP DNS request comprising at least a service acceleration domain name, a source address, and a destination address, the source address being an IP address of the edge cloud gateway, and the destination address being an IP address of the global server load balance; and
   receiving a first HTTP DNS response returned by the global server load balance, the first HTTP DNS response comprising at least the edge-application VIP, the edge-application VIP being determined by the global server load balance based on the IP address of the edge cloud gateway and the service acceleration domain name,
where in a case that the protocol port information in the domain name request meets the preset protocol port requirement, or the destination address in the domain name request is the IP address of the global server load balance, the transmitting, based on the domain name request, a second HTTP DNS request to the global server load balance includes:
   resolving, in a case that the request status of the domain name request represents the DNS request, the domain name request to obtain the domain name in the domain name request, and re-encapsulating the resolved domain name request into a second HTTP DNS request; and
   transmitting the second HTTP DNS request to the global server load balance.

According to another aspect, an edge cloud gateway for selecting a MEC node is provided according to an embodiment of this application. The edge cloud gateway is arranged in a system for selecting a MEC node, the system includes at least a user plane function, the edge cloud gateway, and a global server load balance, the edge cloud gateway includes: a first receiving module, an obtaining module, a transmitting module, a second receiving module, a determining module, and a routing module. The first receiving module is configured to receive a domain name request forwarded by the user plane function, where a domain name in the domain name request is a preset service acceleration domain name, or a destination address in the domain name request is an IP address of the global server load balance, or protocol port information in the domain name request meets a preset protocol port requirement. The obtaining module is configured to obtain, based on the domain name request, an edge-application virtual IP (VIP) for interconnection between edge-application virtual Internets from the global server load balance. The transmitting module is configured to return a domain name response to a terminal by using the user plane function, where the domain name response includes at least the edge-application VIP. The second receiving module is configured to receive a service request forwarded by the user plane function, where a destination address of the service request is the edge-application VIP. The determining module is configured to determine a mobile edge computing (MEC) processing server according to the service request and a preset routing policy. The routing module is configured to route the service request to the MEC processing server. The edge cloud gateway further includes a recording module, which is configured to record a request status of the domain name request, the request status representing a DNS request or a first HTTP DNS request. The obtaining module is further configured to: transmit, based on the domain name request, a second HTTP DNS request to the global server load balance, the second HTTP DNS request comprising at least a service acceleration domain name, a source address, and a destination address, the source address being an IP address of the edge cloud gateway, and the destination address being an IP address of the global server load balance; andreceive a first HTTP DNS response returned by the global server load balance, the first HTTP DNS response comprising at least the edge-application VIP, the edge-application VIP being determined by the global server load balance based on the IP address of the edge cloud gateway and the service acceleration domain name. In a case that the protocol port information in the domain name request meets the preset protocol port requirement, or the destination address in the domain name request is the IP address of the GSLB, the obtaining module is further configured to: resolve, in a case that the request status of the domain name request represents the DNS request, the domain name request to obtain the domain name in the domain name request, and re-encapsulate the resolved domain name request into a second HTTP DNS request; and transmit the second HTTP DNS request to the GSLB.

In an embodiment, the transmitting module is further configured to:
return a DNS response in a case that the request status of the domain name request represents the DNS request; and
return a second HTTP DNS response in a case that the request status of the domain name request represents the first HTTP DNS request.

In an embodiment, pre-configuration rules corresponding to the user plane function, the edge cloud gateway, and the global server load balance are different from each other, the each of the pre-configuration rules representing a routing configuration for service acceleration.

In an embodiment, the user plane function corresponds to a first pre-configuration rule, the first pre-configuration rule includes at least: forwarding the domain name request in which the domain name is the preset service acceleration domain name to the edge cloud gateway; or forwarding the domain name request in which the destination address is the IP address of the global server load balance to the edge cloud gateway; or forwarding the service request in which the destination address is the edge-application VIP to the edge cloud gateway. The edge cloud gateway corresponds to a second pre-configuration rule, the second pre-configuration rule including at least: the preset routing policy. The global server load balance corresponds to a third pre-configuration rule, the third pre-configuration rule includes at least: for an HTTP DNS request in which a source address is the IP address of the edge cloud gateway, returning the edge-application VIP based on the IP address of the edge cloud gateway and a service acceleration domain name in the HTTP DNS request.

In an embodiment, the user plane function corresponds to a fourth pre-configuration rule, the fourth pre-configuration rule includes at least: forwarding the domain name request in which the protocol port information meets the preset protocol port requirement to the edge cloud gateway; or forwarding the domain name request in which the destination address is the IP address of the global server load balance to the edge cloud gateway; or forwarding the service request in which the destination address is the edge-application VIP to the edge cloud gateway. The edge cloud gateway corresponds to a fifth pre-configuration rule, the fifth pre-configuration rule includes at least: the preset routing policy, and has a DNS request resolving function.

In an embodiment, the first pre-configuration rule, the second pre-configuration rule, the fourth pre-configuration rule, or the fifth pre-configuration rule is configured by an edge controller or is locally configured. The edge controller is arranged in a cloud center of a core network in the system, and is communicably connected to the edge cloud gateway and the user plane function.

According to another aspect, a system for selecting a MEC node is provided according to an embodiment of this application, which includes at least a user plane function, an edge cloud gateway, and a global server load balance. The user plane function is configured to receive a domain name request transmitted by a terminal, and forward the domain name request to the edge cloud gateway in a case that that a domain name in the domain name request is a preset service acceleration domain name or a destination address in the domain name request is an IP address of the global server load balance, or in a case that protocol port information in the domain name request meets a preset protocol port requirement. The edge cloud gateway is configured to: obtain, based on the domain name request, an edge-application virtual IP (VIP) for interconnection between edge-application virtual Internets from the global server load balance; return a domain name response to a terminal by using the user plane function, the domain name response including at least the edge-application VIP; receive a service request forwarded by the user plane function, the service request being forwarded by the user plane function in a case that a destination address in the service request transmitted by the terminal is the edge-application VIP; and determine a mobile edge computing (MEC) processing server based on the service request and a preset routing policy, and route the service request to the MEC processing server. The edge cloud gateway is further configured to: record a request status of the domain name request, the request status representing a DNS request or a first HTTP DNS request; transmit, based on the domain name request, a second HTTP DNS request to the global server load balance, the second HTTP DNS request comprising at least a service acceleration domain name, a source address, and a destination address, the source address being an IP address of the edge cloud gateway, and the destination address being an IP address of the global server load balance; and receive a first HTTP DNS response returned by the global server load balance, the first HTTP DNS response comprising at least the edge-application VIP, the edge-application VIP being determined by the global server load balance based on the IP address of the edge cloud gateway and the service acceleration domain name. In a case that the protocol port information in the domain name request meets the preset protocol port requirement, or the destination address in the domain name request is the IP address of the global server load balance, the edge cloud gateway transmitting, based on the domain name request, a second HTTP DNS request to the global server load balance includes: resolving, in a case that the request status of the domain name request represents the DNS request, the domain name request to obtain the domain name in the domain name request, and re-encapsulating the resolved domain name request into a second HTTP DNS request; and transmitting the second HTTP DNS request to the global server load balance.

An electronic device is further provided according to another embodiment of this application, which includes a memory, a processor, and a computer program stored in the memory and executable on the processor. The processor, when executing the program, performs the method for selecting a mobile edge computing node according to the foregoing aspect.

According to another aspect, a storage medium is provided according to an embodiment of this application, which is configured to store a computer program. The computer program is configured to perform the method for selecting a mobile edge computing node according to the foregoing aspect.

According to another aspect, a computer program product including instructions is provided according to an embodiment of this application. The instructions, when run on a computer, cause the computer to perform the method for selecting a mobile edge computing node according to the foregoing aspect.

The technical solutions provided in the embodiments of this application can achieve at least the following beneficial effects. A method for selecting a mobile edge computing node is provided, which is performed by an edge cloud gateway. The edge cloud gateway is arranged in a system for selecting a mobile edge computing node. The system includes at least a user plane function, the edge cloud gateway, and a global server load balance. For a domain name request transmitted by a terminal, which may be a DNS request or an HTTP DNS request, the user plane function may analyze and process the domain name request, and forward the domain name request to the edge cloud gateway when service acceleration is required. Further, the edge cloud gateway performs processing, and may obtain an edge-application VIP from the global server load balance, and transmit the edge-application VIP to the terminal by using the user plane function, so that the terminal transmits a service request in which a destination address is the edge-application VIP, and the edge cloud gateway routes the service request of the terminal to a mobile edge computing (MEC) processing server. In this way, by arranging an edge cloud gateway and by improving an existing network access procedure, the method in this application is compatible with DNS and HTTP DNS addressing scenarios, thereby providing flexible application scenarios, and achieving a mechanism for selecting a mobile edge computing node, thus providing a solution for selecting a mobile edge computing node for a 5G mobile communication network. Therefore, a nearby edge computing node can be selected, thereby achieving edge acceleration.

### BRIEF DESCRIPTION OF THE DRAWINGS

FIG. 1 is a schematic flowchart of a CDN scheduling method in conventional technology.
FIG. 2 is a schematic diagram of an architecture of a system for selecting a mobile edge computing node according to an embodiment of this application.
FIG. 3 is a flowchart of a method for selecting a mobile edge computing node according to an embodiment of this application.
FIG. 4 is an interactive flowchart of a method for selecting a mobile edge computing node according to an embodiment of this application.
FIG. 5 is an interactive flowchart of a method for selecting a mobile edge computing node according to another embodiment of this application.
FIG. 6 is a schematic structural diagram of an apparatus for selecting a mobile edge computing node according to an embodiment of this application.
FIG. 7 is a schematic structural diagram of an electronic device according to an embodiment of this application.

### DESCRIPTION OF EMBODIMENTS

The following clearly and completely describes the technical solutions in embodiments of this application with reference to the drawings in the embodiments of this application. Apparently, the described embodiments are some of the embodiments of this application rather than all of the embodiments. All other embodiments obtained by a person of ordinary skill in the art based on the embodiments of this application without creative efforts shall fall within the protection scope of this application.

Content delivery network (CDN) is a network with a basic idea of avoiding, as many as possible, bottlenecks and links on the Internet that may affect a speed and stability of data transmission, so that content is transmitted fast and stable, and the CDN can provide nearby access for acceleration.

Domain name system (DNS), as a distributed database that can map a domain name to an Internet Protocol (IP) address for interconnection of networks, enable the users to access the Internet quickly without having to remember an IP address data string that can be directly read by a machine.

User plane function (UPF) is responsible for user plane processing.

Global server load balance (GSLB) performs traffic distribution between servers in different regions on a wide area network including the Internet, and directs a user request to the nearest node (or region) to ensure access quality.

MEC indicates a technology that deeply integrates the mobile access network with the Internet service based on the 5G evolution architecture. The MEC, by using a wireless access network, provides services and cloud computing functions required by the Internet technology (IT) for telecommunication users, to create a carrier-class service environment with high performance, low latency, and high bandwidth, so as to accelerate download of various content, services, and applications in the network, allowing consumers to experience an uninterrupted high-quality network.

Virtual IP (VIP) is an IP address that does not link to a specific computer or a network interface controller in a computer. Packets are transmitted to this VIP address, while all data still passes through a real network interface.

Edge-application VIP is located in an edge equipment room, and indicates a virtual IP that provides local acceleration for an application.

At present, the gradual development of the 5G mobile communication network leads to higher requirements for processing and transmission rates of communication services. The MEC can provide computing, storage, and processing capabilities, and the like by using a mobile access network nearby to reduce latency. However, how to schedule a mobile terminal to a MEC node that is located closest to the mobile terminal is a problem that needs to be resolved urgently. 5G is a frontier technology, and there are few related researches, and there is no relevant solution for how to select a MEC node in a 5G mobile communication network.

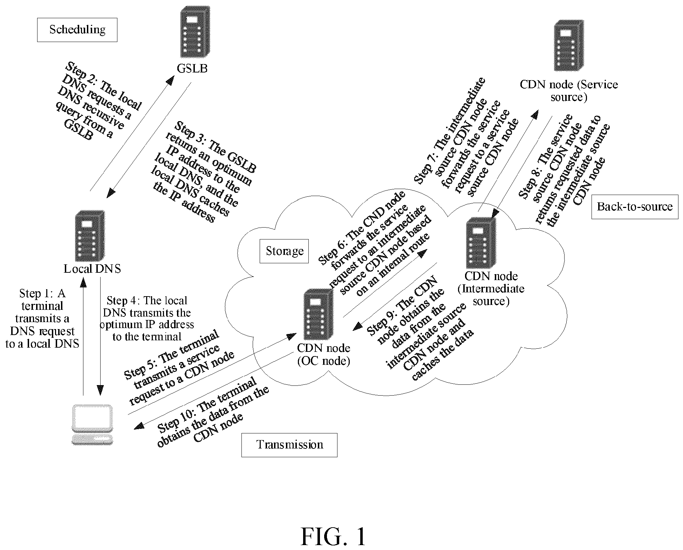

In addition, the conventional DNS addressing mechanism in the conventional technology is similar to a process of determining an IP address for data transmission. FIG. 1 is a schematic flowchart of a CDN scheduling method in conventional technology, which includes the following steps 1 to 10.

In Step 1, a terminal transmits a DNS request to a local DNS.

In Step 2, the local DNS requests a GSLB to perform a DNS recursive query.

In Step 3, the GSLB returns an optimum IP address for access to the local DNS, and the local DNS caches the IP address.

In Step 4, the local DNS transmits the optimum IP address to the terminal.

In Step 5, the terminal transmits a service request to a CDN node.

The CDN node is an edge node, that is, an outer center (OC).

In Step 6, the CDN node forwards the service request to an intermediate source CDN node based on an internal route.

In Step 7, the intermediate source CDN node forwards the service request to a service source CDN node.

In Step 8, the service source CDN node returns requested data to the intermediate source CDN node.

In Step 9, the CDN node obtains the data from the intermediate source CDN node and caches the data.

In Step 10, the terminal obtains the data from the CDN node.

With the above scheduling method of the conventional technology, a position of the terminal is positioned based on the IP address allocated by an operator, then the terminal is scheduled to the nearest CDN node. However, the IP positioning technology has large deviations and low precision, and can only reach a provincial level. However, there are many mobile edge computing nodes in a region, precision requirements of the MEC nodes cannot be met, that is, the terminal cannot be scheduled to the nearest MEC node.

Therefore, in the embodiments of this application, a method for selecting a mobile edge computing node is provided, which is used mainly for a 5G mobile communication network, and is compatible with a standard DNS and a Hyper Text Transport Protocol (HTTP) DNS. During application of standard DNS and HTTP DNS addressing processes of the terminal, an existing network access procedure is improved without being perceived by the terminal, enabling accessing of an edge computing node nearby, thus achieving service acceleration.

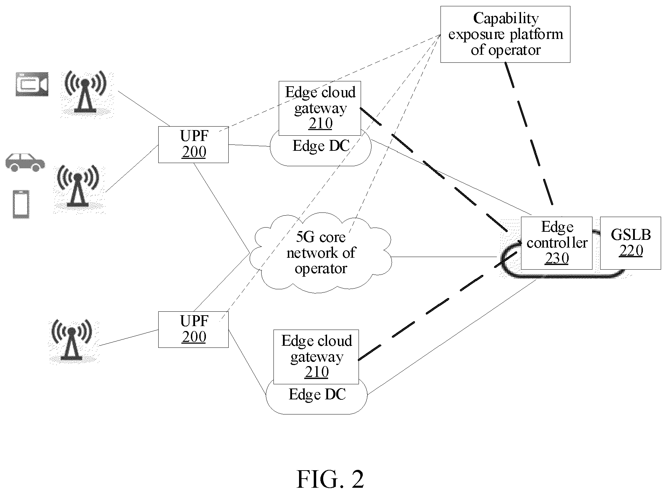

FIG. 2 is a diagram of an architecture of a system for selecting a mobile edge computing node according to an embodiment of this application, which includes at least a UPF 200, an edge cloud gateway 210, and a GSLB 220, and further includes an edge controller 230.

It is to be noted that, in this embodiment of this application, in a network architecture layout, a data channel may connect a central cloud and an edge cloud of a core network of an operator, and the edge cloud gateway 210 and the edge controller 230 are added to route data to an edge computing node. The edge cloud gateway 210 is arranged on a MEC node side or an edge data center (DC) side, and the edge controller 230 is arranged at a central cloud of the core network and communicably connected to the edge cloud gateway 210 and the UPF 200. The GSLB 220 is also deployed on the central cloud side of the core network, which is arranged in parallel to the edge controller 230. In addition, the UPF 200, the edge cloud gateway 210, and the GSLB 220 respectively correspond to different pre-configuration rules. The pre-configuration rule represents a routing configuration for service acceleration.
1) The edge controller 230 is mainly responsible for scheduling of global service traffic, and controls to schedule service traffic to the edge cloud gateway 210, and then, the edge cloud gateway 210 schedules the service traffic to a specific local MEC processing server, which can be performed in the following steps a, b and c.

In step a, the edge controller 230 connects a capability exposure platform of an operator, and pre-configure the UPF 200 and the edge cloud gateway 210 when deploying an edge service.

Specifically, the edge controller 230 is configured to configure a first pre-configuration rule and a fourth pre-configuration rule of the UPF 200, and a second pre-configuration rule and a fifth pre-configuration rule of the edge cloud gateway 210. The foregoing configuration rules are described in detail in the following embodiments.

For example, as shown in FIG. 2, the edge controller 230 may pre-configure the UPF 200 by using the capability exposure platform of the operator and a 5G core network of the operator.

In step b, the edge controller 230 dynamically collects user position information from a 5G core network side of the operator, and selects nearby edge computing nodes for hosting services, the hosting services represent services that require edge computing in the 5G mobile communication network, that is, services that require service acceleration.

In step c, the edge controller 230 connects to a cloud infrastructure-as-a-service (IaaS) or platform-as-a-service (PaaS) controller to control edge DC resources.

The IaaS and PaaS are not shown in FIG. 2. In practice, the IaaS and PaaS may be located between the edge cloud gateway 210 and the edge controller 230. The edge controller 230 may monitor a load status of the edge cloud gateway 210 through the IaaS and PaaS, and control load scheduling of the edge cloud gateway 210.

2) The GSLB 220 also needs to be pre-configured when an edge service is deployed. Specifically, the GSLB 220 corresponds to a third pre-configuration rule, where the third pre-configuration rule includes at least the following aspects a and b.
a. For an HTTP DNS request in which a source address is the IP address of the edge cloud gateway 210, an edge-application VIP is returned based on the IP address of the edge cloud gateway 210 and the service acceleration domain name in the HTTP DNS request.

For example, when receiving the second HTTP DNS request transmitted by the edge cloud gateway 210, the GSLB 220 returns the first HTTP DNS response to the edge cloud gateway 210. The second HTTP DNS request includes at least a service acceleration domain name, a source address, and a destination address, where the source address is an IP address of the edge cloud gateway 210, and the destination address is an IP address of the GSLB 220. The first HTTP DNS response includes at least the edge-application VIP, where the edge-application VIP is determined by the GSLB 220 based on the IP address of the edge cloud gateway 210 and the service acceleration domain name.

b. For the GSLB 220, intervention may be manually applied, to return configured IP addresses for different source addresses in the HTTP DNS request.

3) The UPF 200, in this embodiment of this application, needs to be pre-configured. A pre-configuration function represents a routing configuration for service acceleration. The UPF 200 needs to provide a routing configuration function. The UPF 200 corresponds to the first pre-configuration rule or the fourth pre-configuration rule.

The first pre-configuration rule includes at least the following aspects a, b and c.
a. The domain name request in which the domain name is the preset service acceleration domain name is forwarded to the edge cloud gateway 210.

In an embodiment of this application, the domain name request transmitted by the terminal may be a standard DNS request or a first HTTP DNS request, which is not limited in this embodiment of this application.

This rule is mainly used for a domain name request of which a request status represent a DNS request. The UPF 200 may resolve the DNS request to detect a domain name in the DNS request. That is, in the first pre-configuration rule, the UPF 200 may have a function of resolving a DNS request to detect a domain name in the DNS request, thereby forwarding the domain name request to the edge cloud gateway 210.

b. The domain name request in which the destination address is the IP address of the GSLB 220 is forwarded to the edge cloud gateway 210.

In the first pre-configuration rule of the UPF 200, a and b are performed for domain name requests transmitted by the terminal. In a case that the UPF 200 receives the domain name request transmitted by the terminal, for a domain name request of which a request status represents a DNS request, the UPF 200 may resolve the DNS request to detect the domain name, and for a domain name request of which a request status represents a first HTTP DNS request, the UPF 200 may detect a destination address.

Specifically, the UPF 200 is configured to receive the domain name request transmitted by the terminal, and forward the domain name request to the edge cloud gateway 210 if a domain name in the domain name request is a preset service acceleration domain name or a destination address in the domain name request is an IP address of the GSLB 220.

c. The service request in which the destination address is the edge-application VIP is forwarded to the edge cloud gateway 210.

Specifically, the UPF 200 is configured to receive the service request transmitted by the terminal, and forward the service request to the edge cloud gateway 210 if a destination address in the service request is the edge-application VIP.

The fourth pre-configuration rule includes at least the following aspects a, b and c.
a. The domain name request in which the protocol port information meets the preset protocol port requirement is forwarded to the edge cloud gateway 210.

In an embodiment of this application, in the fourth pre-configuration rule, the UPF 200 does not have the function of resolving a domain name request of a DNS request, and the domain name request of the DNS request is mainly resolved by the edge cloud gateway 210. Therefore, in the fourth pre-configuration rule, in a case that the UPF 200 receives the domain name request transmitted by the terminal, the UPF 200 may detect only protocol port information or a destination address of the domain name request.

For a domain name request of which a request status represents a DNS request, detecting protocol port information is mainly performed by detecting protocol port information of the DNS request. For example, a preset protocol port is required to be a user datagram protocol (UDP) port 53. If it is determined that the protocol port information is the UDP port 53, it indicates that the domain name request is a DNS request, the domain name request is forwarded to the edge cloud gateway 210, for the edge cloud gateway 210 to perform a DNS request resolving function subsequently to obtain a domain name, so as to determine whether acceleration is needed.

b. The domain name request in which the destination address is the IP address of the GSLB 220 is forwarded to the edge cloud gateway 210.

Specifically, the UPF 200 is configured to receive the domain name request transmitted by the terminal, and forward the domain name request to the edge cloud gateway 210 if protocol port information in the domain name request meets a preset protocol port requirement, or a destination address in the domain name request is an IP address of the GSLB 220.

c. The service request in which the destination address is the edge-application VIP is forwarded to the edge cloud gateway 210.

It is to be noted that the first pre-configuration rule or the fourth pre-configuration rule is configured by the edge controller 230, or is configured locally. That is, the UPF 200 not only can be configured and managed by the edge controller 230 in a unified manner, but also can be configured and loaded locally, which is not limited in this embodiment of this application.

4) The edge cloud gateway 210 is mainly configured for intelligent scheduling, load balancing, statistical analysis, and the like of local traffic, that is, traffic within a geographical range for which the edge cloud gateway 210 is responsible, to schedule service traffic to a specific MEC processing server. In this embodiment of this application, when an edge service is deployed, the edge cloud gateway 210 also needs to be pre-configured. Specifically, the edge cloud gateway 210 corresponds to the second pre-configuration rule or the fifth pre-configuration rule.

The second pre-configuration rule includes at least: a preset routing policy.

For example, the preset routing policy is performed to perform routing based on IP 5-tuple information. For example, an IP 5-tuple generally includes a source IP address, a destination IP address, a protocol number, a source port, and a destination port, and the routing can be performed based on a load balancing algorithm. For example, the load balancing algorithm is source address hashing algorithm, with which a hash operation is performed on the source IP address, to obtain a hash value. Based on the hash value and configuration rules of a MEC processing server list, a MEC processing server is determined, and the service request is forwarded to the MEC processing server for processing.

In another example, the preset routing policy is performed to perform routing based on uniform resource locator (URL) information. For example, according to a service type of the domain name request in the service request, and a specific domain name or resource type stored on each MEC processing server, for example, a specific domain name or resource type representing a service type of processing an image or video, the service request may be forwarded to a MEC processing server that corresponds to a service type of the service request.

The specific routing policy is not limited in this embodiment of this application, and may be selected and used according to actual requirements.

The fifth pre-configuration rule includes at least the preset routing policy, and the edge cloud gateway 210 has a DNS request resolving function.

That is, in the two pre-configuration rules of the edge cloud gateway 210, compared with the second pre-configuration rule, in the fifth pre-configuration rule, the edge cloud gateway 210 has a function of resolving a standard DNS request. Therefore, the edge cloud gateway 210 can resolve a DNS message, to obtain a domain name carried therein, and re-encapsulate the resolved DNS message into a second HTTP DNS request.

It is to be noted that the second pre-configuration rule or the fifth pre-configuration rule is configured by the edge controller 230, or is configured locally. That is, the edge cloud gateway 210 not only can be configured and managed by the edge controller 230 in a unified manner, but also can be configured and loaded locally, which is not limited in this embodiment of this application.

It is to be noted that, the pre-configuration rule of the edge cloud gateway 210 corresponds to the pre-configuration rule of the UPF 200. After the UPF 200 receives the domain name request transmitted by the terminal, if the UPF 200 performs operations based on the first pre-configuration rule, that is, performs resolution to obtain the domain name or the destination address and forwards the domain name request to the edge cloud gateway 210, the edge cloud gateway 210 performs corresponding operations based on the second pre-configuration rule, and may directly encapsulate the domain name request into a second HTTP DNS request based on information such as the domain name, and transmit the second HTTP DNS request to the GSLB 220. If the UPF 200 performs operations based on the fourth pre-configuration rule, that is, only detects protocol port information or a destination address without performing resolution, and forwards the domain name request to the edge cloud gateway 210, the edge cloud gateway 210 performs corresponding operations based on the fifth pre-configuration rule. That is, if the domain name request is a DNS request, the edge cloud gateway 210 resolves the DNS request, encapsulates the DNS request into a second HTTP DNS request, and transmits the second HTTP DNS request to the GSLB 220. For the two implementations, no limitation is imposed in this embodiment of this application.

Specifically, the edge cloud gateway 210 is configured to perform the following steps S1 to S4.

In step S1, the edge cloud gateway 210 obtains an edge-application VIP from the GSLB 220 based on the domain name request.

Further, the edge cloud gateway 210 is further configured to record a request status of the domain name request, where the request status represents a DNS request or a first HTTP DNS request.

That is, in this embodiment of this application, the terminal may be supported to initiate a domain name request for an original domain name by using the standard DNS or the first HTTP DNS request, where a destination address is an IP address of GSLB 220.

When S1 is performed, the edge cloud gateway 210 is further configured to perform the following steps S1.1 and S1.2.

In step S1.1, the edge cloud gateway 210 transmits a second HTTP DNS request to the GSLB 220 based on the domain name request, where the second HTTP DNS request includes at least a service acceleration domain name, a source address, and a destination address, the source address is an IP address of the edge cloud gateway 210, and the destination address is an IP address of the GSLB 220.

Specifically, there may be the following two cases when performing step S1.1.

In a first case, a domain name in the domain name request is a preset service acceleration domain name, or a destination address in the domain name request is the IP address of GSLB 220.

That is, the pre-configuration rule of the UPF 200 is the first pre-configuration rule. The UPF 200 may resolve a domain name request of which a request status represents a DNS request, to obtain a domain name in the DNS request. Regardless of whether the domain name request transmitted by the terminal is a DNS request or a first HTTP DNS request, after receiving the domain name request transmitted by the UPF 200, the edge cloud gateway 210 is further configured to re-encapsulate, based on the domain name request, the domain name request into a second HTTP DNS request by using its IP address as a source address, and forward the second HTTP DNS request to the GSLB 220.

That is, in the first case, for the first pre-configuration rule corresponding to the UPF 200, the UPF 200 has a DNS request resolving function, and the edge cloud gateway 210 corresponds to the second pre-configuration rule, that is, after receiving the domain name request, the edge cloud gateway 210 does not resolve the domain name request that is a DNS request.

In a second case, the protocol port information in the domain name request meets the preset protocol port requirement, or the destination address in the domain name request is the IP address of the GSLB 220.

The edge cloud gateway 210 is further configured to resolve, if the request status of the domain name request represents the DNS request, the domain name request to obtain the domain name in the domain name request, re-encapsulates the resolved domain name request into a second HTTP DNS request, and transmits the second HTTP DNS request to the GSLB 220.

That is, in the second case, for the fourth pre-configuration rule corresponding to the UPF 200, the UPF 200 does not have a DNS request resolving function. After the domain name request is transmitted to the edge cloud gateway 210, where the edge cloud gateway 210 corresponds to the fifth pre-configuration rule and the edge cloud gateway 210 has a DNS request resolving function, the edge cloud gateway 210 resolves a domain name request of which a request status represents a DNS request, re-encapsulates the domain name request into a second HTTP DNS request, and transmits the second HTTP DNS request to the GSLB 220.

In addition, if the request status of the domain name request represents a first HTTP DNS request, although the edge cloud gateway 210 does not need to resolve the domain name request, the edge cloud gateway 210 still needs to re-encapsulate the domain name request, for example, by changing the source address to its IP address, and then transmits the re-encapsulated domain name request to the GSLB 220.

In step S1.2, the edge cloud gateway 210 receives a first HTTP DNS response returned by the GSLB 220, where the first HTTP DNS response includes at least the edge-application VIP, the edge-application VIP is determined by the GSLB 220 based on the IP address of the edge cloud gateway 210 and the service acceleration domain name.

In step S2, the edge cloud gateway 210 returns a domain name response to a terminal by using the UPF 200, where the domain name response includes at least the edge-application VIP.

When step S2 is performed, the edge cloud gateway 210 is further configured to:
return a DNS response in a case that the request status of the domain name request represents the DNS request; and
return a second HTTP DNS response in a case that the request status of the domain name request represents the first HTTP DNS request.

In this embodiment of this application, after receiving the first HTTP DNS response returned by the GSLB 220, the edge cloud gateway 210 needs to return a response packet to the terminal by using the UPF 200 based on the request status of the domain name request transmitted by the terminal. That is, if the request status of the domain name request transmitted by the terminal represents a DNS request, the edge cloud gateway 210 needs to encapsulate the domain name request into a standard DNS response packet and returns the standard DNS response packet to the UPF 200; and if the request status of the domain name request transmitted by the terminal represents a first HTTP DNS request, the edge cloud gateway 210 needs to encapsulate the domain name request into a second HTTP DNS response packet and return the second HTTP DNS response packet to the UPF 200. Then, the UPF 200 transmits the received response packet to the terminal.

In step S3, the edge cloud gateway 210 receives a service request forwarded by the UPF 200, where the service request is forwarded in a case that the UPF 200 obtains through resolution that a destination address in the service request transmitted by the terminal is the edge-application VIP.

In step S4, the edge cloud gateway 210 determines a MEC processing server based on the service request and a preset routing policy, and route the service request to the MEC processing server.

In this way, the method according to the embodiments of this application is compatible with standard DNS and HTTP DNS addressing mechanisms. By arranging an edge cloud gateway and an edge controller, a terminal can initiate a domain name request for an original domain name by using a standard DNS request or a first HTTP DNS request, and a domain name request that requires service acceleration can be forwarded to the edge cloud gateway. If the domain name request transmitted by the terminal is a DNS request, a UPF may be configured to resolve the DNS request. Alternatively, the edge cloud gateway is configured to have a DNS request resolving function, so that the edge cloud gateway can perform processing on the domain name request. The edge cloud gateway obtains an edge-application VIP from a GSLB, transmits the edge-application VIP to the terminal by using the UPF, such that the terminal can transmit a service request based on the edge-application VIP, and routes the service request of the terminal to a specific MEC processing server. Because the edge cloud gateway is located closer to the terminal and the edge cloud gateway can convert the original DNS request into an HTTP DNS request without passing a local DNS, thereby simplifying the access procedure. In this way, a higher processing rate can be realized, and the latency is reduced. In addition, the method can be applied to a DNS or HTTP DNS addressing scenario to correctly select a nearby edge computing node, thereby achieving edge acceleration. Further, various over-the-top (OTT) services can be provided for users through the Internet under the framework of the conventional technology without changing smooth access of a MEC node, which is not perceived by the users, thereby improving the ease of implementation and user experience.

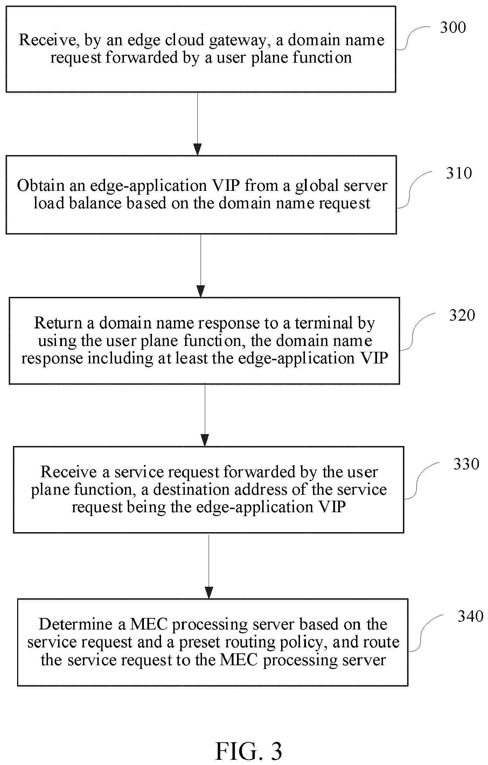

Based on the diagram of an architecture of the system shown in FIG. 2 in the foregoing embodiment, FIG. 3 is a flowchart of a method for selecting a MEC node according to an embodiment of this application. The method is mainly applied to an edge cloud gateway, the method includes the following step 300 to 340.

In Step 300, an edge cloud gateway receives a domain name request forwarded by a user plane function.

The domain name request is forwarded by the user plane function in a case that a domain name in the domain name request transmitted by the terminal is a preset service acceleration domain name, or a destination address in the domain name request transmitted by the terminal is an IP address of the GSLB. Alternatively, the domain name request is forwarded by the user plane function in a case that protocol port information in the domain name request transmitted by the terminal meets the preset protocol port requirement, or a destination address in the domain name request transmitted by the terminal is the IP address of the GSLB.

Further, the method may further include: recording a request status of the domain name request, where the request status represents a DNS request or a first HTTP DNS request.

In this embodiment of this application, in a case that the domain name request transmitted by the terminal is forwarded to the edge cloud gateway, the following two possible implementations are provided based on different configuration rules of the user plane function and the edge cloud gateway.

In a first implementation, the UPF corresponds to the first pre-configuration rule, the edge cloud gateway corresponds to the second pre-configuration rule, and the GSLB corresponds to the third pre-configuration rule, that is, the UPF may have the DNS request resolving function.

The UPF receives the domain name request transmitted by the terminal, if the request status of the domain name request represents a DNS request, the UPF resolves the domain name request transmitted by the terminal, and forwards the domain name request to the edge cloud gateway in a case that the domain name is a preset service acceleration domain name, and if the request status of the domain name request represents a first HTTP DNS request, the UPF forwards the domain name request to the edge cloud gateway in a case that the destination address of the domain name request is the IP address of the GSLB.

In a second implementation, the UPF corresponds to the fourth pre-configuration rule, the edge cloud gateway corresponds to the fifth pre-configuration rule, and the GSLB corresponds to the third pre-configuration rule, that is, the edge cloud gateway may have the DNS request resolving function.

The UPF receives the domain name request transmitted by the terminal, if the request status of the domain name request represents a DNS request, the UPF forwards the domain name request to the edge cloud gateway in a case that protocol port information in the domain name request meets the preset protocol port requirement, and if the request status of the domain name request represents a first HTTP DNS request, the UPF forwards the domain name request to the edge cloud gateway in a case that that the destination address of the domain name request is the IP address of the GSLB.

In Step 310, an edge-application VIP is obtained from a GSLB based on the domain name request.

Specifically, step 310 includes the following steps S 1 and S2.

In stepS1, a second HTTP DNS request is transmitted to the GSLB based on the domain name request, where the second HTTP DNS request includes at least a service acceleration domain name, a source address, and a destination address, the source address is an IP address of the edge cloud gateway, and the destination address is an IP address of the GSLB.

Based on the two implementations described in step 300, step S1 may be performed in the following two implementations.

In a first implementation, the UPF corresponds to the first pre-configuration rule, the edge cloud gateway corresponds to the second pre-configuration rule, and the GSLB corresponds to the third pre-configuration rule, that is, the UPF may have the DNS request resolving function.

If the request status of the domain name request represents a DNS request, and in a case that the UPF has resolved the DNS request and forwarded the DNS request to the edge cloud gateway, the edge cloud gateway only needs to directly re-encapsulate the resolved domain name request into a second HTTP DNS request and transmit the second HTTP DNS request to the GSLB. If the request status of the domain name request represents a first HTTP DNS request, the edge cloud gateway may change the source address in the domain name request to the IP address of the edge cloud gateway to obtain the second HTTP DNS request and forward the second HTTP DNS request to the GSLB.

In a second implementation, the UPF corresponds to the fourth pre-configuration rule, the edge cloud gateway corresponds to the fifth pre-configuration rule, and the GSLB corresponds to the third pre-configuration rule, that is, the edge cloud gateway may have the DNS request resolving function.

If the request status of the domain name request represents a DNS request, the edge cloud gateway resolves the domain name request to obtain a domain name in the domain name request, re-encapsulates the resolved domain name request into a second HTTP DNS request, and transmits the second HTTP DNS request to the global server load balance. If the request status of the domain name request represents a first HTTP DNS request, the edge cloud gateway may change the source address in the domain name request, to obtain the second HTTP DNS request, and forward the second HTTP DNS request to the GSLB.

In step S2, a first HTTP DNS response returned by the GSLB is received, where the first HTTP DNS response includes at least the edge-application VIP, the edge-application VIP is determined by the GSLB based on the IP address of the edge cloud gateway and the service acceleration domain name.

In Step 320, a domain name response is returned to a terminal by using the user plane function, where the domain name response includes at least the edge-application VIP.

Step 320 may be performed in the following two cases.

In a first case, a DNS response is returned in a case that the request status of the domain name request represents the DNS request.

In a second case, a second HTTP DNS response is returned in a case that the request status of the domain name request represents the first HTTP DNS request.

In Step 330, a service request forwarded by the user plane function is received, where a destination address of the service request is the edge-application VIP.

In this case, in both the first pre-configuration rule and the fourth pre-configuration rule, the UPF pre-configures the rule of forwarding the service request in which the destination address is the edge-application VIP to the edge cloud gateway.

In Step 340, a MEC processing server is determined based on the service request and a preset routing policy, and the service request is routed to the MEC processing server.

In this way, in the embodiments of this application, an edge cloud gateway is arranged, the method in this application is compatible with DNS and HTTP DNS addressing scenarios. A domain name request of a terminal is forwarded to the edge cloud gateway, and is processed by the edge cloud gateway, finally a service request of the terminal is routed to a corresponding MEC processing server, achieving a mechanism for selecting a MEC node, thus achieving service acceleration and providing a MEC node selection solution for a 5G mobile communication network.

Based on the foregoing embodiment, specific application scenarios are used below for description. For different pre-configuration rules of the UPF and the edge cloud gateway, two different implementations are adopted below to illustrate the method for selecting a MEC node in this embodiment of this application.

In a first implementation, the UPF corresponds to the first pre-configuration rule, the edge cloud gateway corresponds to the second pre-configuration rule, a scenario in which the UPF resolves the DNS request may be described as follows.

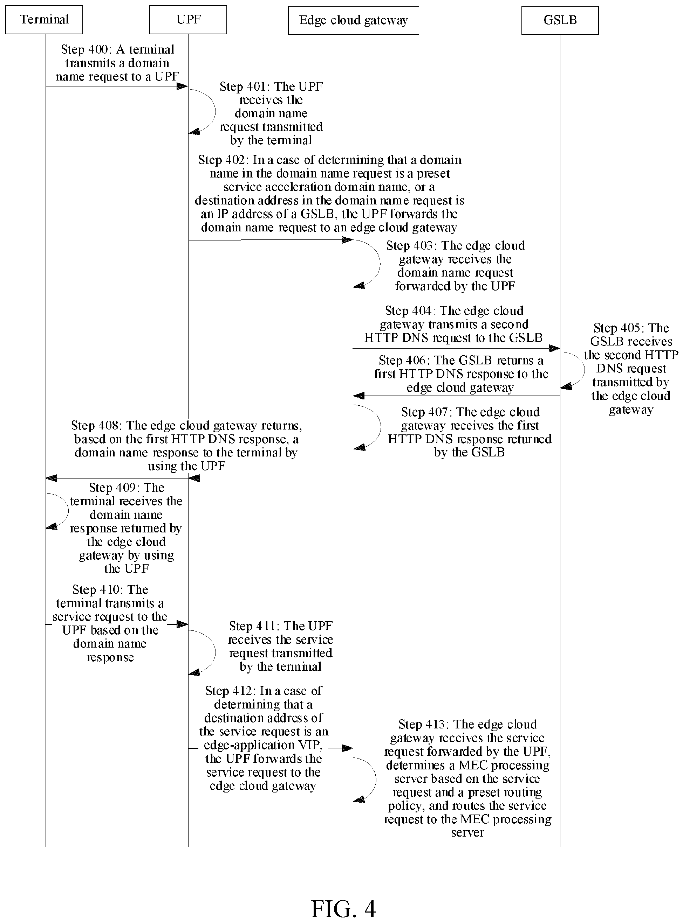

FIG. 4 is an interactive flowchart of a method for selecting a MEC node according to an embodiment of this application.

In Step 400, a terminal transmits a domain name request to a UPF.

Specifically, the terminal can initiate a request for an original domain name by using a standard DNS or an HTTP DNS, that is, the terminal can initiate a request for an original domain name based on a conventional DNS or HTTP DNS addressing mechanism.

The request status of the domain name request represents a DNS request or a first HTTP DNS request.

In Step 401, the UPF receives the domain name request transmitted by the terminal.

In Step 402, in a case of determining that a domain name in the domain name request is a preset service acceleration domain name, or a destination address in the domain name request is an IP address of a GSLB, the UPF forwards the domain name request to an edge cloud gateway.

In an embodiment of this application, a first pre-configuration rule may be configured for the UPF, so that the UPF has a DNS request resolving function. Based on the corresponding first pre-configuration rule, the UPF may, for a domain name request of which a request status represents a DNS request, resolve the DNS request, and determine whether a domain name in the DNS request is a domain name that requires service acceleration. For a domain name request of which a request status represents a first HTTP DNS request, the UPF may detect a destination address, and determine that service acceleration is required if the destination address is the IP address of the GSLB, and forwards the domain name request to the edge cloud gateway.

In Step 403, the edge cloud gateway receives the domain name request forwarded by the UPF.

In Step 404, the edge cloud gateway transmits a second HTTP DNS request to the GSLB.

The second HTTP DNS request includes at least a service acceleration domain name, a source address, and a destination address, the source address is an IP address of the edge cloud gateway, and the destination address is an IP address of the GSLB.

Further, the edge cloud gateway records the request status of the domain name request.

That is, the edge cloud gateway initiates a second HTTP DNS request to the GSLB by using its IP address as the source address. In this way, for a domain name request of which a request status represents a DNS request, the edge cloud gateway may convert the original DNS request into a second HTTP DNS request, and the second HTTP DNS request another time can be directly transmitted to the GSLB in a next time without passing a local DNS, which simplifies an access procedure. For a domain name request of which a request status represents a first HTTP DNS request, the edge cloud gateway changes a source address to its IP address and transmits a second HTTP DNS request to the GSLB, so that the GSLB may return an edge-application VIP for service acceleration in a case that the GSLB determines, based on the source address, that the source address is the IP address of the edge cloud gateway.

In Step 405, the GSLB receives the second HTTP DNS request transmitted by the edge cloud gateway.

In Step 406, the GSLB returns a first HTTP DNS response to the edge cloud gateway.

The first HTTP DNS response includes at least the edge-application VIP, where the edge-application VIP is determined by the GSLB based on the IP address of the edge cloud gateway and the service acceleration domain name.

In this embodiment of this application, this step may be implemented by the GSLB based on the third pre-configuration rule. In a case that a source address in the second HTTP DNS request is the IP address of the edge cloud gateway, and a domain name of the request is a service acceleration domain name, the GSLB returns, based on the IP address of the edge cloud gateway and a service configuration corresponding to the service acceleration domain name, an actual edge-application VIP.

In Step 407, the edge cloud gateway receives the first HTTP DNS response returned by the GSLB.

In Step 408, the edge cloud gateway returns, based on the first HTTP DNS response, a domain name response to a terminal by using the UPF.

The domain name response includes at least the edge-application VIP.

Specifically, there may be the following two cases.
1) A DNS response is returned in a case that the request status of the domain name request represents the DNS request.
2) A second HTTP DNS response is returned in a case that the request status of the domain name request represents the first HTTP DNS request.

In Step 409, the terminal receives the domain name response returned by the edge cloud gateway by using the UPF.

In Step 410, the terminal transmits a service request to the UPF based on the domain name response.

Specifically, after receiving the domain name response, the terminal may initiate a service request by using the edge-application VIP in the domain name response as a destination address, where the destination address in the service request is the edge-application VIP.

In Step 411, the UPF receives the service request transmitted by the terminal.

In Step 412, in a case of determining that the destination address of the service request is the edge-application VIP, the UPF forwards the service request to the edge cloud gateway.

In this step, the UPF forwards the service request in which the destination address is the edge-application VIP to the edge cloud gateway based on the first pre-configuration rule or the fourth pre-configuration rule.

In Step 413, the edge cloud gateway receives the service request forwarded by the UPF, determines a MEC processing server based on the service request and a preset routing policy, and routes the service request to the MEC processing server.

In this way, in this embodiment of this application, a service data procedure for selecting a MEC node is provided mainly for a 5G mobile communication network. The UPF is configured to have a DNS request resolving function. By using devices such as the edge cloud gateway, this service data procedure can be applied to a DNS or HTTP DNS addressing scenario of the terminal, to route a service to a nearest MEC processing server with high precision, thereby selecting a mobile edge computing node with reduced latency, thus achieving service acceleration.

In a second implementation, the UPF corresponds to the fourth pre-configuration rule, the edge cloud gateway corresponds to the fifth pre-configuration rule, that is, a scenario in which the edge cloud gateway resolves the DNS request may be described as follows.

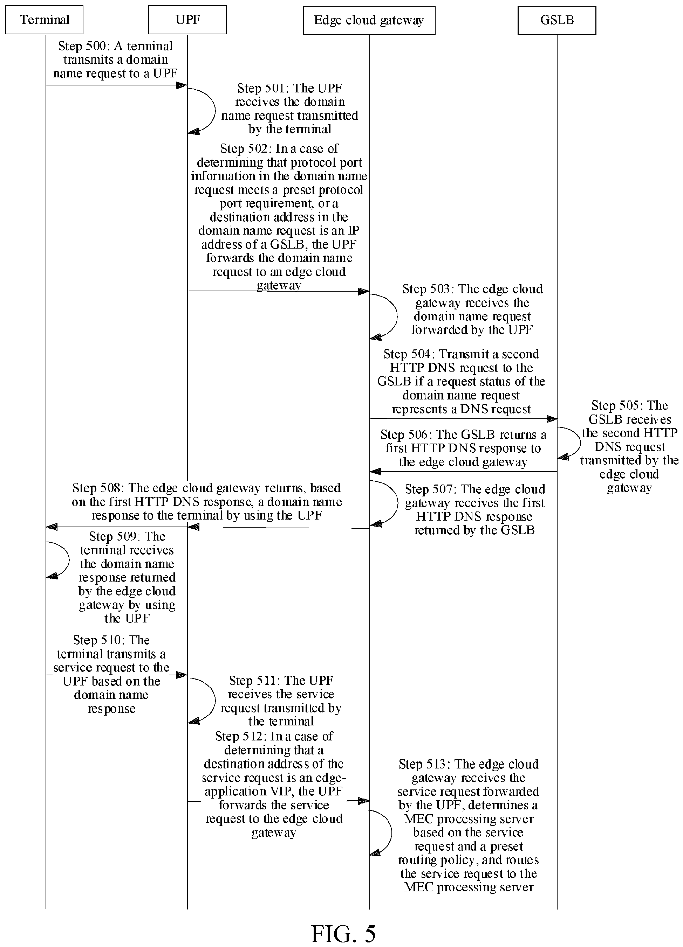

FIG. 5 is an interactive flowchart of a method for selecting a MEC node according to an embodiment of this application.

In Step 500, a terminal transmits a domain name request to a UPF.

The request status of the domain name request represents a DNS request or a first HTTP DNS request.

In Step 501, the UPF receives the domain name request transmitted by the terminal.

In Step 502, in a case of determining that protocol port information in the domain name request meets a preset protocol port requirement, or a destination address in the domain name request is an IP address of a GSLB, the UPF forwards the domain name request to an edge cloud gateway.

This step is performed by the UPF based on the fourth pre-configuration rule.

In this embodiment of this application, the fourth pre-configuration rule may be configured for the UPF, so that the UPF does not resolve the DNS request. Based on the fourth pre-configuration rule, the UPF may detect, for a domain name request of which a request status represents a DNS request, protocol port information of the domain name request, and if the protocol port information meets a preset requirement, for example, the protocol port information indicates a UDP port 53, the UPF may determine that the domain name request is a DNS request, and forward the domain name request to the edge cloud gateway, so that the edge cloud gateway can resolve the DNS request based on the fifth pre-configuration rule. For a domain name request of which a request status represents a first HTTP DNS request, the UPF may detect a destination address in the domain name request, and if the destination address is the IP address of the GSLB, the UPF may determine that service acceleration is required, and forward the domain name request to the edge cloud gateway.

In Step 503, the edge cloud gateway receives the domain name request forwarded by the UPF.

In Step 504, a second HTTP DNS request is transmitted to the GSLB if a request status of the domain name request represents a DNS request.

If the request status of the domain name request represents the DNS request, the edge cloud gateway resolves the domain name request to obtain a domain name, and re-encapsulates the resolved domain name request into a second HTTP DNS request.

The second HTTP DNS request includes at least a service acceleration domain name, a source address, and a destination address, the source address is an IP address of the edge cloud gateway, and the destination address is an IP address of the GSLB.

Further, the edge cloud gateway records the request status of the domain name request.

The fifth pre-configuration rule is configured for the edge cloud gateway. In this embodiment of this application, the edge cloud gateway is configured to have a DNS request resolving function. If the request status of the domain name request represents a DNS request, the edge cloud gateway resolves the domain name request to obtain a domain name in the domain name request, re-encapsulates the resolved domain name request into a second HTTP DNS request, and transmits the obtained second HTTP DNS request to the GSLB.

If the request status of the domain name request represents the first HTTP DNS request, the edge cloud gateway encapsulates the domain name request into a second HTTP DNS request by directly using its IP address as a source address, and forwards the second HTTP DNS request to the GSLB.

In Step 505, the GSLB receives the second HTTP DNS request transmitted by the edge cloud gateway.

In Step 506, the GSLB returns a first HTTP DNS response to the edge cloud gateway.

The first HTTP DNS response includes at least the edge-application VIP, the edge-application VIP being determined by the GSLB according to the IP address of the edge cloud gateway and the service acceleration domain name.

This step may be performed by the GSLB based on the third pre-configuration rule.

In Step 507, the edge cloud gateway receives the first HTTP DNS response returned by the GSLB.

In this embodiment of this application, in steps 504 and 507, the edge cloud gateway may be considered as serving as a conventional local DNS (LDNS), and has a function of the LDNS.

In Step 508, the edge cloud gateway returns a domain name response to a terminal by using the UPF and based on the first HTTP DNS response.

The domain name response includes at least the edge-application VIP.

Specifically, there may be the following two cases.
1) A DNS response is returned in a case that the request status of the domain name request represents the DNS request.
2) A second HTTP DNS response is returned in a case that the request status of the domain name request represents the first HTTP DNS request.

In Step 509, the terminal receives the domain name response returned by the edge cloud gateway by using the UPF.

In Step 510, the terminal transmits a service request to the UPF based on the domain name response.

Specifically, after receiving the domain name response, the terminal may initiate a service request by using the edge-application VIP in the domain name response as a destination address, where the destination address in the service request is the edge-application VIP.

In Step 511, the UPF receives the service request transmitted by the terminal.

In Step 512, in a case of determining that the destination address of the service request is the edge-application VIP, the UPF forwards the service request to the edge cloud gateway.

Here, the UPF forwards the service request in which the destination address is the edge-application VIP to the edge cloud gateway based on the first pre-configuration rule or the fourth pre-configuration rule.

In Step 513, the edge cloud gateway receives the service request forwarded by the UPF, determines a MEC processing server based on the service request and a preset routing policy, and routes the service request to the MEC processing server.

In this way, in this embodiment of this application, another service data procedure for selecting a MEC node is provided mainly for a 5G mobile communication network. The edge cloud gateway is configured to have a DNS request resolving function. By using devices such as the edge cloud gateway, the service data procedure can be applied to a DNS or HTTP DNS addressing scenario of the terminal to correctly select a nearby MEC node and route a service to a nearest MEC processing server with high position precision, thereby achieving edge acceleration.

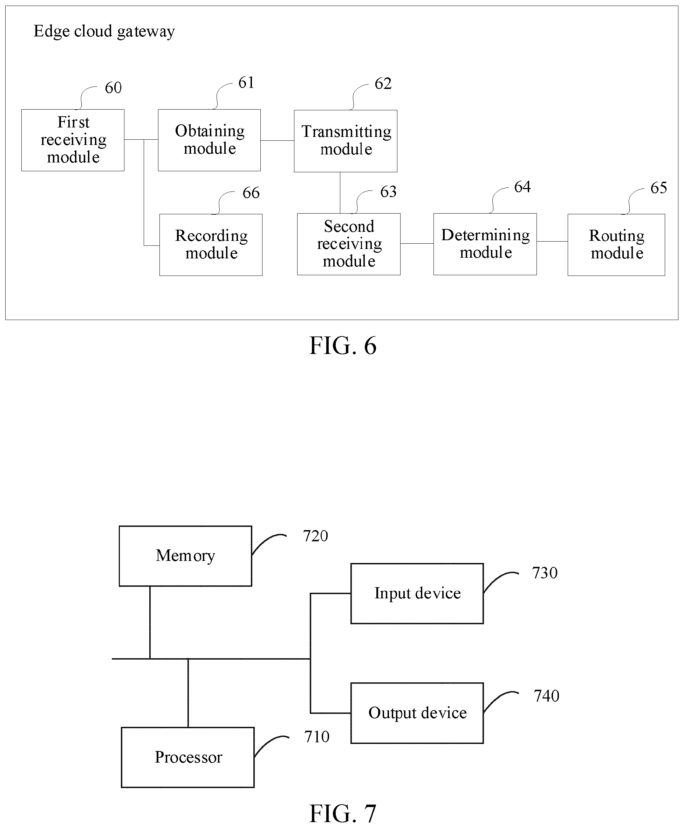

Based on the foregoing embodiments, FIG. 6 shows an edge cloud gateway for selecting a mobile edge computing node according to an embodiment of this application. The edge cloud gateway is arranged in a system for selecting a MEC node. The system includes at least a UPF, the edge cloud gateway, and a GSLB. The edge cloud gateway includes: a first receiving module 60, an obtaining module 61, a transmitting module 62, a second receiving module 63, a determining module 64, and a routing module 65. The first receiving module 60 is configured to receive a domain name request forwarded by the UPF, where a domain name in the domain name request is a preset service acceleration domain name, or a destination address in the domain name request is an IP address of the GSLB, or protocol port information in the domain name request meets a preset protocol port requirement. The obtaining module 61 is configured to obtain an edge-application VIP from the GSLB based on the domain name request. The transmitting module 62 is configured to return a domain name response to a terminal by using the UPF, where the domain name response includes at least the edge-application VIP. The second receiving module 63 is configured to receive a service request forwarded by the UPF, where a destination address of the service request is the edge-application VIP. The determining module 64 is configured to determine a MEC processing server based on the service request and a preset routing policy. The routing module 65 is configured to route the service request to the MEC processing server.

In an embodiment, the edge cloud gateway further includes a recording module 66, which is configured to record a request status of the domain name request, where the request status represents a DNS request or a first HTTP DNS request.

In an embodiment, the obtaining module 61 is further configured to:
transmit a second HTTP DNS request to the GSLB based on the domain name request, where the second HTTP DNS request includes at least a service acceleration domain name, a source address, and a destination address, the source address is an IP address of the edge cloud gateway, and the destination address is an IP address of the GSLB; and
receive a first HTTP DNS response returned by the GSLB, where the first HTTP DNS response includes at least the edge-application VIP, the edge-application VIP is determined by the GSLB based on the IP address of the edge cloud gateway and the service acceleration domain name.

In an embodiment, in a case that the protocol port information in the domain name request meets the preset protocol port requirement, or the destination address in the domain name request is the IP address of the GSLB, the obtaining module 61 is further configured to:
resolve, in a case that the request status of the domain name request represents the DNS request, the domain name request to obtain the domain name in the domain name request, and re-encapsulate the resolved domain name request into a second HTTP DNS request; and transmit the second HTTP DNS request to the GSLB.

In an embodiment, the transmitting module 62 is further configured to:
return a DNS response in a case that the request status of the domain name request represents the DNS request; and
return a second HTTP DNS response in a case that the request status of the domain name request represents the first HTTP DNS request.

In an embodiment, pre-configuration rules corresponding to the UPF, the edge cloud gateway, and the GSLB are different from each other, and each of the pre-configuration rules represents a routing configuration for service acceleration.

In an embodiment, the UPF corresponds to a first pre-configuration rule, the first pre-configuration rule includes at least: forwarding the domain name request in which the domain name is the preset service acceleration domain name to the edge cloud gateway; or forwarding the domain name request in which the destination address is the IP address of the GSLB to the edge cloud gateway; or forwarding the service request in which the destination address is the edge-application VIP to the edge cloud gateway.

The edge cloud gateway corresponds to a second pre-configuration rule, the second pre-configuration rule includes at least: the preset routing policy.

The GSLB corresponds to a third pre-configuration rule, the third pre-configuration rule includes at least: for an HTTP DNS request in which a source address is the IP address of the edge cloud gateway, returning the edge-application VIP based on the IP address of the edge cloud gateway and a service acceleration domain name in the HTTP DNS request.

In an embodiment, the UPF corresponds to a fourth pre-configuration rule, the fourth pre-configuration rule includes at least: forwarding the domain name request in which the protocol port information meets the preset protocol port requirement to the edge cloud gateway; or forwarding the domain name request in which the destination address is the IP address of the GSLB to the edge cloud gateway; or forwarding the service request in which the destination address is the edge-application VIP to the edge cloud gateway.

The edge cloud gateway corresponds to a fifth pre-configuration rule, the fifth pre-configuration rule includes at least: the preset routing policy, and has a DNS request resolving function.

In an embodiment, the first pre-configuration rule, the second pre-configuration rule, the fourth pre-configuration rule, or the fifth pre-configuration rule is configured by an edge controller or is locally configured,
the edge controller is arranged in a cloud center of a core network in the system, and is communicably connected to the edge cloud gateway and the UPF.

Based on the foregoing embodiments, FIG. 7 is a schematic structural diagram of an electronic device according to an embodiment of this application.

An electronic device is further provided according to an embodiment of this application. The electronic device may include a center processing unit (CPU) 710, a memory 720, an input device 730, an output device 740, and the like. The input device 730 may include a keyboard, a mouse, a touch screen, and the like. The output device 740 may include a display device, such as a liquid crystal display (LCD) or a cathode ray tube (CRT).

The memory 720 may include a read-only memory (ROM) and a random access memory (RAM), and provide program instructions and data stored in the memory 720 for the processor 710. In this embodiment of this application, the memory 720 may be configured to store a program of performing the method for selecting a mobile edge computing node according to any one of the embodiments of this application.

The processor 710 invokes the program instructions stored in the memory 720, and the processor 710 is configured to perform, in response to the obtained program instructions, the method for selecting a MEC node according to any one of the embodiments of this application.

Based on the foregoing embodiments, a computer-readable storage medium is further provided according to an embodiment of this application, which stores a computer program. The computer program, when executed by a processor, performs the method for selecting a mobile edge computing node according to any one of the method embodiments described above.

A person skilled in the art should understand that the embodiments of this application may be provided as a method, a system, or a computer program product. Therefore, this application may use a form of hardware-only embodiments, software-only embodiments, or embodiments combining software and hardware. Moreover, this application may use a form of a computer program product that is implemented on one or more computer-usable storage media (including but not limited to a disk memory, a CD-ROM, an optical memory, and the like) that include computer-usable program code.

In an exemplary embodiment, a computer program product is further provided, the computer program product, when executed, performs the method for selecting a mobile edge computing node provided in the foregoing embodiments.

This application is described with reference to flowcharts and/or block diagrams of the method, the device (system), and the computer program product according to the embodiments of this application. It is to be understood that computer program instructions maybe used to implement each procedure and/or block in the flowcharts and/or block diagrams and a combination of procedures and/or blocks in the flowcharts and/or block diagrams. The computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

The computer program instructions may be alternatively stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may further be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although exemplary embodiments of this application have been described, once a person skilled in the art learns of the basic creative concept, additional changes and modifications can be made to the embodiments. Therefore, the following claims are intended to be construed as to cover the exemplary embodiments and all changes and modifications falling within the scope of this application.

## Claims

1. A method for selecting a mobile edge computing node, wherein the method is performed by an edge cloud gateway, the edge cloud gateway is arranged in a system for selecting a mobile edge computing node, the system comprises at least a user plane function, the edge cloud gateway, and a global server load balance, the method comprises:
receiving, by the edge cloud gateway, a domain name request forwarded by the user plane function, a domain name in the domain name request being a preset service acceleration domain name or a destination address in the domain name request being an IP address of the global server load balance, or protocol port information in the domain name request meeting a preset protocol port requirement;
obtaining, based on the domain name request, an edge-application virtual IP, VIP, for interconnection between edge-application virtual Internets from the global server load balance;
returning a domain name response to a terminal by using the user plane function, the domain name response comprising at least the edge-application VIP;
receiving a service request forwarded by the user plane function, a destination address of the service request being the edge-application VIP; and
determining a mobile edge computing, MEC, processing server based on the service request and a preset routing policy, and routing the service request to the MEC processing server, wherein
the method further comprising:
recording a request status of the domain name request, the request status representing a DNS request or a first HTTP DNS request,
wherein the obtaining, based on the domain name request, an edge-application VIP for interconnection between edge-application virtual Internets from the global server load balance comprises:
transmitting, based on the domain name request, a second HTTP DNS request to the global server load balance, the second HTTP DNS request comprising at least a service acceleration domain name, a source address, and a destination address, the source address being an IP address of the edge cloud gateway, and the destination address being an IP address of the global server load balance; and
receiving a first HTTP DNS response returned by the global server load balance, the first HTTP DNS response comprising at least the edge-application VIP, the edge-application VIP being determined by the global server load balance based on the IP address of the edge cloud gateway and the service acceleration domain name,
wherein in a case that the protocol port information in the domain name request meets the preset protocol port requirement, or the destination address in the domain name request is the IP address of the global server load balance, the transmitting, based on the domain name request, a second HTTP DNS request to the global server load balance comprises:
resolving, in a case that the request status of the domain name request represents the DNS request, the domain name request to obtain the domain name in the domain name request, and re-encapsulating the resolved domain name request into a second HTTP DNS request; and
transmitting the second HTTP DNS request to the global server load balance.

2. The method according to claim 1, wherein the returning a domain name response to a terminal by using the user plane function comprises:
returning a DNS response in a case that the request status of the domain name request represents the DNS request; and
returning a second HTTP DNS response in a case that the request status of the domain name request represents the first HTTP DNS request.

3. The method according to any one of claims 1 to 2, wherein pre-configuration rules corresponding to the user plane function, the edge cloud gateway, and the global server load balance are different from each other, the each of the pre-configuration rules representing a routing configuration for service acceleration.

4. The method according to claim 3, wherein the user plane function corresponds to a first pre-configuration rule, the first pre-configuration rule comprising at least:
forwarding the domain name request in which the domain name is the preset service acceleration domain name to the edge cloud gateway; or
forwarding the domain name request in which the destination address is the IP address of the global server load balance to the edge cloud gateway; or
forwarding the service request in which the destination address is the edge-application VIP to the edge cloud gateway,
the edge cloud gateway corresponds to a second pre-configuration rule, the second pre-configuration rule comprising at least the preset routing policy, and
the global server load balance corresponds to a third pre-configuration rule, the third pre-configuration rule comprising at least:
for an HTTP DNS request in which a source address is the IP address of the edge cloud gateway, returning the edge-application VIP based on the IP address of the edge cloud gateway and a service acceleration domain name in the HTTP DNS request.

5. The method according to claim 3, wherein the user plane function corresponds to a fourth pre-configuration rule, the fourth pre-configuration rule comprising at least:
forwarding the domain name request in which the protocol port information meets the preset protocol port requirement to the edge cloud gateway; or
forwarding the domain name request in which the destination address is the IP address of the global server load balance to the edge cloud gateway; or
forwarding the service request in which the destination address is the edge-application VIP to the edge cloud gateway, and
the edge cloud gateway corresponds to a fifth pre-configuration rule, the fifth pre-configuration rule comprising at least the preset routing policy, and having a DNS request resolving function.

6. The method according to claim 4 or 5, wherein the first pre-configuration rule, the second pre-configuration rule, the fourth pre-configuration rule, or the fifth pre-configuration rule is configured by an edge controller or is locally configured,
the edge controller being arranged in a cloud center of a core network in the system, and being communicably connected to the edge cloud gateway and the user plane function.

7. The method according to any one of claims 1 to 2, wherein the edge cloud gateway is arranged on a MEC node side or an edge data center, DC, side in the system.

8. An edge cloud gateway for selecting a mobile edge computing node, the edge cloud gateway being arranged in a system for selecting a mobile edge computing node, the system comprising at least a user plane function, the edge cloud gateway, and a global server load balance, the edge cloud gateway comprising:
a first receiving module, configured to receive a domain name request forwarded by the user plane function, a domain name in the domain name request being a preset service acceleration domain name or a destination address in the domain name request being an IP address of the global server load balance, or protocol port information in the domain name request meeting a preset protocol port requirement;
an obtaining module, configured to obtain, based on the domain name request, an edge-application virtual IP, VIP, for interconnection between edge-application virtual Internets from the global server load balance;
a transmitting module, configured to return a domain name response to a terminal by using the user plane function, the domain name response comprising at least the edge-application VIP;
a second receiving module, configured to receive a service request forwarded by the user plane function, a destination address of the service request being the edge-application VIP;
a determining module, configured to determine a mobile edge computing, MEC, processing server based on the service request and a preset routing policy; and
an routing module, configured to route the service request to the MEC processing server, wherein
the edge cloud gateway further comprises a recording module, configured to record a request status of the domain name request, the request status representing a DNS request or a first HTTP DNS request, and
the obtaining module is further configured to:
transmit, based on the domain name request, a second HTTP DNS request to the global server load balance, the second HTTP DNS request comprising at least a service acceleration domain name, a source address, and a destination address, the source address being an IP address of the edge cloud gateway, and the destination address being an IP address of the global server load balance; and
receive a first HTTP DNS response returned by the global server load balance, the first HTTP DNS response comprising at least the edge-application VIP, the edge-application VIP being determined by the global server load balance based on the IP address of the edge cloud gateway and the service acceleration domain name, and
in a case that the protocol port information in the domain name request meets the preset protocol port requirement, or the destination address in the domain name request is the IP address of the GSLB, the obtaining module is further configured to:
resolve, in a case that the request status of the domain name request represents the DNS request, the domain name request to obtain the domain name in the domain name request, and re-encapsulate the resolved domain name request into a second HTTP DNS request; and transmit the second HTTP DNS request to the GSLB.

9. A system for selecting a mobile edge computing node, comprising at least a user plane function, an edge cloud gateway, and a global server load balance, wherein
the user plane function is configured to receive a domain name request transmitted by a terminal, and forward the domain name request to the edge cloud gateway in a case that a domain name in the domain name request is a preset service acceleration domain name or a destination address in the domain name request is an IP address of the global server load balance, or in a case that protocol port information in the domain name request meets a preset protocol port requirement, and
the edge cloud gateway is configured to:
obtain, based on the domain name request, an edge-application virtual IP, VIP, for interconnection between edge-application virtual Internets from the global server load balance;
return a domain name response to a terminal by using the user plane function, the domain name response comprising at least the edge-application VIP;
receive a service request forwarded by the user plane function, the service request being forwarded by the user plane function in a case that a destination address in the service request transmitted by the terminal is the edge-application VIP; and
determine a mobile edge computing, MEC, processing server based on the service request and a preset routing policy, and route the service request to the MEC processing server,
the edge cloud gateway is further configured to:
record a request status of the domain name request, the request status representing a DNS request or a first HTTP DNS request;
transmit, based on the domain name request, a second HTTP DNS request to the global server load balance, the second HTTP DNS request comprising at least a service acceleration domain name, a source address, and a destination address, the source address being an IP address of the edge cloud gateway, and the destination address being an IP address of the global server load balance; and
receive a first HTTP DNS response returned by the global server load balance, the first HTTP DNS response comprising at least the edge-application VIP, the edge-application VIP being determined by the global server load balance based on the IP address of the edge cloud gateway and the service acceleration domain name,
wherein in a case that the protocol port information in the domain name request meets the preset protocol port requirement, or the destination address in the domain name request is the IP address of the global server load balance, the edge cloud gateway transmitting, based on the domain name request, a second HTTP DNS request to the global server load balance comprises:
resolving, in a case that the request status of the domain name request represents the DNS request, the domain name request to obtain the domain name in the domain name request, and re-encapsulating the resolved domain name request into a second HTTP DNS request; and
transmitting the second HTTP DNS request to the global server load balance.

10. A computer-readable storage medium, storing a computer program, the computer program being configured to perform the method according to any one of claims 1 to 7.

11. A computer program product comprising instructions, the instructions, when run on a computer, causing the computer to perform the method according to any one of claims 1 to 7.

## Patentansprüche

1. Verfahren zum Auswählen eines mobilen Edge-Computing-Knotens, wobei das Verfahren von einem Edge-Cloud-Gateway durchgeführt wird, das Edge-Cloud-Gateway in einem System zum Auswählen eines mobilen Edge-Computing-Knotens angeordnet ist, das System mindestens eine Benutzerebenenfunktion, das Edge-Cloud-Gateway und einen globalen Server-Lastausgleich umfasst, und das Verfahren umfasst:
Empfangen, durch das Edge-Cloud-Gateway, einer von der Benutzerebenenfunktion weitergeleiteten Domänennamensanforderung, wobei ein Domänenname in der Domänennamensanforderung ein voreingestellter Dienstbeschleunigungsdomänenname ist oder eine Zieladresse in der Domänennamensanforderung eine IP-Adresse des globalen Serverlastausgleichs ist oder Protokollportinformationen in der Domänennamensanforderung eine voreingestellte Protokollportanforderung erfüllen;
Erhalten, auf der Grundlage der Domänennamensanforderung, einer virtuelle IP (VIP) der Randanwendung für die Verbindung zwischen virtuellem Internet der Randanwendung vom globalen Server-Lastausgleich;
Rücksenden einer Domänennamen-Antwort an ein Endgerät unter Verwendung der Benutzerebenenfunktion, wobei die Domänennamen-Antwort mindestens den VIP der Randanwendung enthält;
Empfangen einer Dienstanforderung, die von der Benutzerebenenfunktion weitergeleitet wird, wobei eine Zieladresse der Dienstanforderung der VIP der Randanwendung ist; und
Bestimmen eines Mobile-Edge-Computing-, MEC-, Verarbeitungsservers auf der Grundlage der Dienstanforderung und einer voreingestellten Leitweglenkungsrichtlinie und Leiten der Dienstanforderung an den MEC-Verarbeitungsserver, wobei
das Verfahren umfasst ferner:
Aufzeichnen eines Anforderungsstatus der Domänennamenanforderung, wobei der Anforderungsstatus eine DNS-Anforderung oder eine erste HTTP-DNS-Anforderung darstellt,
wobei das Erhalten, basierend auf der Domänennamenanforderung, eines Randanwendungs-VIPs für die Verbindung zwischen virtuellem Internet der Randanwendung von der globalen Serverlastverteilung umfasst:
Übertragen einer zweiten HTTP-DNS-Anforderung an den globalen Server-Lastausgleich auf der Grundlage der Domänennamensanforderung, wobei die zweite HTTP-DNS-Anforderung mindestens einen Domänennamen zur Dienstbeschleunigung, eine Quelladresse und eine Zieladresse umfasst, wobei die Quelladresse eine IP-Adresse des Edge-Cloud-Gateways ist und die Zieladresse eine IP-Adresse des globalen Server-Lastausgleichs ist; und
Empfangen einer ersten HTTP-DNS-Antwort, die von dem globalen Server-Lastausgleich zurückgegeben wird, wobei die erste HTTP-DNS-Antwort mindestens das VIP der Edge-Anwendung enthält, wobei das VIP der Edge-Anwendung von dem globalen Server-Lastausgleich auf der Grundlage der IP-Adresse des Edge-Cloud-Gateways und des Domänennamens der Dienstbeschleunigung bestimmt wird,
wobei in einem Fall, in dem die Protokoll-Port-Information in der Domain-Namen-Anforderung die voreingestellte Protokoll-Port-Anforderung erfüllt oder die Zieladresse in der Domain-Namen-Anforderung die IP-Adresse des globalen Server-Lastausgleichs ist, das Übertragen, basierend auf der Domain-Namen-Anforderung, einer zweiten HTTP-DNS-Anforderung an den globalen Server-Lastausgleich umfasst:
Auflösen, in einem Fall, dass der Anforderungsstatus der Domänennamensanforderung die DNS-Anforderung darstellt, der Domänennamensanforderung, um den Domänennamen in der Domänennamensanforderung zu erhalten, und Wiedereinkapseln der aufgelösten Domänennamensanforderung in eine zweite HTTP-DNS-Anforderung; und
Übermitteln der zweiten HTTP-DNS-Anfrage an den globalen Server-Lastausgleich.

2. Verfahren nach Anspruch 1, wobei das Rücksenden einer Domänennamenantwort an ein Endgerät unter Verwendung der Benutzerebenenfunktion umfasst:
Rücksenden einer DNS-Antwort in dem Fall, dass der Anforderungsstatus der Domänennamenanforderung die DNS-Anforderung darstellt; und
Rücksenden einer zweiten HTTP-DNS-Antwort in dem Fall, dass der Anfragestatus der Domänennamenanfrage der ersten HTTP-DNS-Anfrage entspricht.

3. Verfahren nach einem der Ansprüche 1 bis 2, wobei die Vorkonfigurationsregeln, die der Funktion der Benutzerebene, dem Edge-Cloud-Gateway und dem globalen Server-Lastausgleich entsprechen, voneinander verschieden sind, wobei jede der Vorkonfigurationsregeln eine Routing-Konfiguration für die Dienstbeschleunigung darstellt.

4. Verfahren nach Anspruch 3, wobei die Funktion der Benutzerebene einer ersten Vorkonfigurationsregel entspricht, wobei die erste Vorkonfigurationsregel mindestens umfasst:
Weiterleiten der Domänennamenanforderung, bei der der Domänenname der voreingestellte Domänenname zur Dienstbeschleunigung ist, an das Edge-Cloud-Gateway; oder
Weiterleiten der Domain-Namen-Anfrage, bei der die Zieladresse die IP-Adresse des globalen Server-Lastausgleichs ist, an das Edge-Cloud-Gateway; oder
Weiterleiten der Dienstanforderung, bei der die Zieladresse der VIP der Edge-Anwendung ist, an das Edge-Cloud-Gateway,
das Edge-Cloud-Gateway einer zweiten Vorkonfigurationsregel entspricht, wobei die zweite Vorkonfigurationsregel mindestens die voreingestellte Routing-Policy umfasst, und
der globale Serverlastausgleich einer dritten Vorkonfigurationsregel entspricht, wobei die dritte Vorkonfigurationsregel mindestens umfasst:
für eine HTTP-DNS-Anforderung, bei der eine Quelladresse die IP-Adresse des Edge-Cloud-Gateways ist, die Rückgabe des VIP der Edge-Anwendung auf der Grundlage der IP-Adresse des Edge-Cloud-Gateways und eines Domänennamens zur Dienstbeschleunigung in der HTTP-DNS-Anforderung.

5. Verfahren nach Anspruch 3, wobei die Funktion der Benutzerebene einer vierten Vorkonfigurationsregel entspricht, wobei die vierte Vorkonfigurationsregel mindestens umfasst:
Weiterleiten der Domänennamensanforderung, bei der die Protokollportinformationen die voreingestellte Protokollportanforderung erfüllen, an das Edge-Cloud-Gateway; oder
Weiterleiten der Domain-Namen-Anfrage, bei der die Zieladresse die IP-Adresse des globalen Server-Lastausgleichs ist, an das Edge-Cloud-Gateway; oder
Weiterleiten der Dienstanforderung, bei der die Zieladresse das VIP der Edge-Applikation ist, an das Edge-Cloud-Gateway und
das Edge-Cloud-Gateway einer fünften Vorkonfigurationsregel entspricht, wobei die fünfte Vorkonfigurationsregel mindestens die voreingestellte Routing-Policy umfasst und eine Funktion zur Auflösung von DNS-Anfragen hat.

6. Verfahren nach Anspruch 4 oder 5, wobei die erste Vorkonfigurationsregel, die zweite Vorkonfigurationsregel, die vierte Vorkonfigurationsregel oder die fünfte Vorkonfigurationsregel von einem Edge Controller konfiguriert wird oder lokal konfiguriert wird,
wobei der Edge-Controller in einem Cloud-Zentrum eines Kernnetzes in dem System angeordnet ist und kommunikativ mit dem Edge-Cloud-Gateway und der Benutzerebenenfunktion verbunden ist.

7. Verfahren nach einem der Ansprüche 1 bis 2, wobei das Edge-Cloud-Gateway auf einer MEC-Knotenseite oder einer Edge-Rechenzentrumsseite (DC) im System angeordnet ist.

8. Edge-Cloud-Gateway zum Auswählen eines mobilen Edge-Computing-Knotens, wobei das Edge-Cloud-Gateway in einem System zum Auswählen eines mobilen Edge-Computing-Knotens angeordnet ist, wobei das System mindestens eine Benutzerebenenfunktion, das Edge-Cloud-Gateway und einen globalen Server-Lastausgleich umfasst, wobei das Edge-Cloud-Gateway umfasst:
ein erstes Empfangsmodul, das so konfiguriert ist, dass es eine von der Benutzerebenenfunktion weitergeleitete Domänennamensanforderung empfängt, wobei ein Domänenname in der Domänennamensanforderung ein voreingestellter Dienstbeschleunigungsdomänenname ist oder eine Zieladresse in der Domänennamensanforderung eine IP-Adresse des globalen Serverlastausgleichs ist oder Protokollportinformationen in der Domänennamensanforderung eine voreingestellte Protokollportanforderung erfüllen;
ein Erfassungsmodul, das so konfiguriert ist, dass es auf der Grundlage der Domänennamensanforderung eine virtuelle IP (VIP) der Randanwendung für die Verbindung zwischen virtuellen Internets der Randanwendung vom globalen Server-Lastausgleich abruft;
ein Sendemodul, das so konfiguriert ist, dass es unter Verwendung der Benutzerebenenfunktion eine Domänennamensantwort an ein Endgerät zurücksendet, wobei die Domänennamensantwort mindestens den VIP der Randanwendung umfasst;
ein zweites Empfangsmodul, das so konfiguriert ist, dass es eine von der Benutzerebenenfunktion weitergeleitete Dienstanforderung empfängt, wobei eine Zieladresse der Dienstanforderung der VIP der Edge-Anwendung ist;
ein Bestimmungsmodul, das so konfiguriert ist, dass es einen Mobile-Edge-Computing-, MEC-, Verarbeitungsserver auf der Grundlage der Dienstanforderung und einer voreingestellten Leitweglenkungsrichtlinie bestimmt; und
ein Routingmodul, das so konfiguriert ist, dass es die Dienstanforderung an den MEC-Verarbeitungsserver weiterleitet, wobei
das Edge-Cloud-Gateway ferner ein Aufzeichnungsmodul umfasst, das so konfiguriert ist, dass es einen Anforderungsstatus der Domain-Namen-Anforderung aufzeichnet, wobei der Anforderungsstatus eine DNS-Anforderung oder eine erste HTTP-DNS-Anforderung darstellt, und
das Erfassungsmodul ist außerdem so konfiguriert, dass es:
Übertragen einer zweiten HTTP-DNS-Anforderung an den globalen Server-Lastausgleich auf der Grundlage der Domänennamensanforderung, wobei die zweite HTTP-DNS-Anforderung mindestens einen Domänennamen zur Dienstbeschleunigung, eine Quelladresse und eine Zieladresse umfasst, wobei die Quelladresse eine IP-Adresse des Edge-Cloud-Gateways ist und die Zieladresse eine IP-Adresse des globalen Server-Lastausgleichs ist; und
Empfangen einer ersten HTTP-DNS-Antwort, die von dem globalen Server-Lastausgleich zurückgegeben wird, wobei die erste HTTP-DNS-Antwort mindestens das VIP der Edge-Anwendung enthält, wobei das VIP der Edge-Anwendung von dem globalen Server-Lastausgleich auf der Grundlage der IP-Adresse des Edge-Cloud-Gateways und des Domänennamens der Dienstbeschleunigung bestimmt wird, und
in einem Fall, in dem die Protokoll-Port-Information in der Domain-Namen-Anforderung die voreingestellte Protokoll-Port-Anforderung erfüllt oder die Zieladresse in der Domain-Namen-Anforderung die IP-Adresse des GSLB ist, ist das Erfassungsmodul weiterhin konfiguriert, um:
in einem Fall, in dem der Anforderungsstatus der Domänennamensanforderung die DNS-Anforderung darstellt, die Domänennamensanforderung auflösen, um den Domänennamen in der Domänennamensanforderung zu erhalten, und die aufgelöste Domänennamensanforderung in eine zweite HTTP-DNS-Anforderung neu einkapseln; und die zweite HTTP-DNS-Anforderung an den GSLB übertragen.

9. System zur Auswahl eines mobilen Edge-Computing-Knotens, das mindestens eine Benutzerebenenfunktion, ein Edge-Cloud-Gateway und einen globalen Server-Lastausgleich umfasst, wobei
die Benutzerebenenfunktion so konfiguriert ist, dass sie eine von einem Endgerät übertragene Domänennamensanforderung empfängt und die Domänennamensanforderung an das Edge-Cloud-Gateway weiterleitet, wenn ein Domänenname in der Domänennamensanforderung ein voreingestellter Dienstbeschleunigungs-Domänenname ist oder eine Zieladresse in der Domänennamensanforderung eine IP-Adresse des globalen Server-Lastausgleichs ist, oder wenn die Protokoll-port-Information in der Domänennamensanforderung eine voreingestellte Protokollport-Anforderung erfüllt, und
das Edge-Cloud-Gateway so konfiguriert ist, dass es:
auf der Grundlage der Domain-Namen-Anforderung eine virtuelle IP-Adresse, VIP, für die Verbindung zwischen virtuellem Internes der Edge-Anwendungen vom globalen Server-Lastausgleich erhalten;
Rücksenden einer Domänennamen-Antwort an ein Endgerät unter Verwendung der Benutzerebenenfunktion, wobei die Domänennamen-Antwort mindestens den VIP der Randanwendung enthält;
Empfangen einer Dienstanforderung, die von der Benutzerebenenfunktion weitergeleitet wird, wobei die Dienstanforderung von der Benutzerebenenfunktion in einem Fall weitergeleitet wird, in dem eine Zieladresse in der von dem Endgerät übertragenen Dienstanforderung der VIP der Randanwendung ist; und
einen MEC-Verarbeitungsserver (Mobile Edge Computing) auf der Grundlage der Dienstanforderung und einer voreingestellten Leitweglenkungsrichtlinie bestimmen und die Dienstanforderung an den MEC-Verarbeitungsserver weiterleiten,
das Edge-Cloud-Gateway ist außerdem so konfiguriert, dass es:
einen Anforderungsstatus der Domänennamenanforderung aufzeichnen, wobei der Anforderungsstatus eine DNS-Anforderung oder eine erste HTTP-DNS-Anforderung darstellt;
Übertragen einer zweiten HTTP-DNS-Anforderung an den globalen Server-Lastausgleich auf der Grundlage der Domänennamensanforderung, wobei die zweite HTTP-DNS-Anforderung mindestens einen Domänennamen zur Dienstbeschleunigung, eine Quelladresse und eine Zieladresse umfasst, wobei die Quelladresse eine IP-Adresse des Edge-Cloud-Gateways ist und die Zieladresse eine IP-Adresse des globalen Server-Lastausgleichs ist; und
Empfangen einer ersten HTTP-DNS-Antwort, die von der globalen Server-Lastverteilung zurückgegeben wird, wobei die erste HTTP-DNS-Antwort mindestens das VIP der Edge-Anwendung umfasst, wobei das VIP der Edge-Anwendung von der globalen Server-Lastverteilung auf der Grundlage der IP-Adresse des Edge-Cloud-Gateways und des Domänennamens der Dienstbeschleunigung bestimmt wird,
wobei in einem Fall, in dem die Protokoll-Port-Information in der Domain-Namen-Anforderung die voreingestellte Protokoll-Port-Anforderung erfüllt, oder die Zieladresse in der Domain-Namen-Anforderung die IP-Adresse des globalen Server-Lastausgleichs ist, das Edge-Cloud-Gateway auf der Grundlage der Domain-Namen-Anforderung eine zweite HTTP-DNS-Anforderung an den globalen Server-Lastausgleich überträgt:
Auflösen, in einem Fall, dass der Anforderungsstatus der Domänennamensanforderung die DNS-Anforderung darstellt, der Domänennamensanforderung, um den Domänennamen in der Domänennamensanforderung zu erhalten, und Wiedereinkapseln der aufgelösten Domänennamensanforderung in eine zweite HTTP-DNS-Anforderung; und
Übermitteln der zweiten HTTP-DNS-Anfrage an den globalen Server-Lastausgleich.

10. Computerlesbares Speichermedium, das ein Computerprogramm speichert, wobei das Computerprogramm so konfiguriert ist, dass es das Verfahren nach einem der Ansprüche 1 bis 7 durchführt.

11. Ein Computerprogrammprodukt, das Anweisungen enthält, wobei die Anweisungen, wenn sie auf einem Computer ausgeführt werden, den Computer veranlassen, das Verfahren nach einem der Ansprüche 1 bis 7 durchzuführen.

## Revendications

1. Procédé pour sélectionner un noeud informatique en périphérie de réseau mobile, dans lequel le procédé est réalisé par une passerelle de cloud en périphérie, la passerelle de cloud en périphérie est agencée dans un système pour sélectionner un noeud informatique en périphérie de réseau mobile, le système comprend au moins une fonction de plan utilisateur, la passerelle de cloud en périphérie et un équilibrage de charge de serveur global, le procédé comprend :
la réception, par la passerelle de cloud en périphérie, d'une requête de nom de domaine réacheminée par la fonction de plan utilisateur, un nom de domaine dans la requête de nom de domaine étant un nom de domaine d'accélération de service prédéfini ou une adresse de destination dans la requête de nom de domaine étant une adresse IP de l'équilibrage de charge de serveur global, ou des informations de port de protocole dans la requête de nom de domaine satisfaisant à une exigence de port de protocole prédéfinie ;
l'obtention, sur la base de la requête de nom de domaine, d'une IP virtuelle, VIP, d'application en périphérie pour une interconnexion entre des internets virtuels d'application en périphérie à partir de l'équilibrage de charge de serveur global ;
le retour d'une réponse de nom de domaine à un terminal en utilisant la fonction de plan utilisateur, la réponse de nom de domaine comprenant au moins la VIP d'application en périphérie ;
la réception d'une requête de service réacheminée par la fonction de plan utilisateur, une adresse de destination de la requête de service étant la VIP d'application en périphérie ; et
la détermination d'un serveur de traitement informatique en périphérie de réseau mobile, MEC, sur la base de la requête de service et d'une politique de routage prédéfinie, et le routage de la requête de service vers le serveur de traitement MEC, dans lequel
le procédé comprenant en outre :
l'enregistrement d'un statut de requête de la requête de nom de domaine, le statut de requête représentant une requête DNS ou une première requête DNS HTTP,
dans lequel l'obtention, sur la base de la requête de nom de domaine, d'une VIP d'application en périphérie pour une interconnexion entre des internets virtuels d'application en périphérie à partir de l'équilibrage de charge de serveur global comprend :
la transmission, sur la base de la requête de nom de domaine, d'une seconde requête DNS HTTP à l'équilibrage de charge de serveur global, la seconde requête DNS HTTP comprenant au moins un nom de domaine d'accélération de service, une adresse de source et une adresse de destination, l'adresse de source étant une adresse IP de la passerelle de cloud en périphérie, et l'adresse de destination étant une adresse IP de l'équilibrage de charge de serveur global ; et
la réception d'une première réponse DNS HTTP retournée par l'équilibrage de charge de serveur global, la première réponse DNS HTTP comprenant au moins la VIP d'application en périphérie, la VIP d'application en périphérie étant déterminée par l'équilibrage de charge de serveur global sur la base de l'adresse IP de la passerelle de cloud en périphérie et du nom de domaine d'accélération de service,
dans lequel dans un cas où les informations de port de protocole dans la requête de nom de domaine satisfont à l'exigence de port de protocole prédéfinie, ou l'adresse de destination dans la requête de nom de domaine est l'adresse IP de l'équilibrage de charge de serveur global, la transmission, sur la base de la requête de nom de domaine, d'une seconde requête DNS HTTP à l'équilibrage de charge de serveur global comprend :
la résolution, dans un cas où le statut de requête de la requête de nom de domaine représente la requête DNS, de la requête de nom de domaine pour obtenir le nom de domaine dans la requête de nom de domaine, et la réencapsulation de la requête de nom de domaine résolue dans une seconde requête DNS HTTP ; et
la transmission de la seconde requête DNS HTTP à l'équilibrage de charge de serveur global.

2. Procédé selon la revendication 1, dans lequel le retour d'une réponse de nom de domaine à un terminal en utilisant la fonction de plan utilisateur comprend :
le retour d'une réponse DNS dans un cas où le statut de requête de la requête de nom de domaine représente la requête DNS ; et
le retour d'une seconde réponse DNS HTTP dans un cas où le statut de requête de la requête de nom de domaine représente la première requête DNS HTTP.

3. Procédé selon l'une quelconque des revendications 1 ou 2, dans lequel des règles de préconfiguration correspondant à la fonction de plan utilisateur, la passerelle de cloud en périphérie et l'équilibrage de charge de serveur global sont différentes les unes des autres, chacune de ces règles de préconfiguration représentant une configuration de routage pour une accélération de service.

4. Procédé selon la revendication 3, dans lequel la fonction de plan utilisateur correspond à une première règle de préconfiguration, la première règle de préconfiguration comprenant au moins :
le réacheminement de la requête de nom de domaine dans laquelle le nom de domaine est le nom de domaine d'accélération de service prédéfini vers la passerelle de cloud en périphérie ; ou
le réacheminement de la requête de nom de domaine dans laquelle l'adresse de destination est l'adresse IP de l'équilibrage de charge de serveur global vers la passerelle de cloud en périphérie ; ou
le réacheminement de la requête de service dans laquelle l'adresse de destination est la VIP d'application en périphérie vers la passerelle de cloud en périphérie,
la passerelle de cloud en périphérie correspond à une deuxième règle de préconfiguration, la deuxième règle de préconfiguration comprenant au moins la politique de routage prédéfinie, et
l'équilibrage de charge de serveur global correspond à une troisième règle de préconfiguration, la troisième règle de préconfiguration comprenant au moins :
pour une requête DNS HTTP dans laquelle une adresse de source est l'adresse IP de la passerelle de cloud en périphérie, le retour de la VIP d'application en périphérie sur la base de l'adresse IP de la passerelle de cloud en périphérie et d'un nom de domaine d'accélération de service dans la requête DNS HTTP.

5. Procédé selon la revendication 3, dans lequel la fonction de plan utilisateur correspond à une quatrième règle de préconfiguration, la quatrième règle de préconfiguration comprenant au moins :
le réacheminement de la requête de nom de domaine dans laquelle les informations de port de protocole satisfont à l'exigence de port de protocole prédéfinie vers la passerelle de cloud en périphérie ; ou
le réacheminement de la requête de nom de domaine dans laquelle l'adresse de destination est l'adresse IP de l'équilibrage de charge de serveur global vers la passerelle de cloud en périphérie ; ou
le réacheminement de la requête de service dans laquelle l'adresse de destination est la VIP d'application en périphérie vers la passerelle de cloud en périphérie, et
la passerelle de cloud en périphérie correspond à une cinquième règle de préconfiguration, la cinquième règle de préconfiguration comprenant au moins la politique de routage prédéfinie, et ayant une fonction de résolution de requête DNS.

6. Procédé selon la revendication 4 ou 5, dans lequel la première règle de préconfiguration, la deuxième règle de préconfiguration, la quatrième règle de préconfiguration ou la cinquième règle de préconfiguration est configurée par un dispositif de commande en périphérie ou est configurée localement,
le dispositif de commande en périphérie étant agencé dans un centre de cloud d'un réseau fédérateur dans le système, et étant connecté de manière à communiquer à la passerelle de cloud en périphérie et à la fonction de plan utilisateur.

7. Procédé selon l'une quelconque des revendications 1 ou 2, dans lequel la passerelle de cloud en périphérie est agencée sur un côté de noeud MEC ou un côté de centre de données, DC, en périphérie dans le système.

8. Passerelle de cloud en périphérie pour sélectionner un noeud informatique en périphérie de réseau mobile, la passerelle de cloud en périphérie étant agencée dans un système pour sélectionner un noeud informatique en périphérie de réseau mobile, le système comprenant au moins une fonction de plan utilisateur, la passerelle de cloud en périphérie et un équilibrage de charge de serveur global, la passerelle de cloud en périphérie comprenant :
un premier module de réception, configuré pour recevoir une requête de nom de domaine réacheminée par la fonction de plan utilisateur, un nom de domaine dans la requête de nom de domaine étant un nom de domaine d'accélération de service prédéfini ou une adresse de destination dans la requête de nom de domaine étant une adresse IP de l'équilibrage de charge de serveur global, ou des informations de port de protocole dans la requête de nom de domaine satisfaisant à une exigence de port de protocole prédéfinie ;
un module d'obtention, configuré pour obtenir, sur la base de la requête de nom de domaine, une IP virtuelle, VIP, d'application en périphérie pour une interconnexion entre des internets virtuels d'application en périphérie à partir de l'équilibrage de charge de serveur global ;
un module de transmission, configuré pour retourner une réponse de nom de domaine à un terminal en utilisant la fonction de plan utilisateur, la réponse de nom de domaine comprenant au moins la VIP d'application en périphérie ;
un second module de réception, configuré pour recevoir une requête de service réacheminée par la fonction de plan utilisateur, une adresse de destination de la requête de service étant la VIP d'application en périphérie ;
un module de détermination, configuré pour déterminer un serveur de traitement informatique en périphérie de réseau mobile, MEC, sur la base de la requête de service et d'une politique de routage prédéfinie ; et
un module de routage, configuré pour router la requête de service vers le serveur de traitement MEC, dans laquelle
la passerelle de cloud en périphérie comprend en outre un module d'enregistrement, configuré pour enregistrer un statut de requête de la requête de nom de domaine, le statut de requête représentant une requête DNS ou une première requête DNS HTTP, et
le module d'obtention est en outre configuré pour :
transmettre, sur la base de la requête de nom de domaine, une seconde requête DNS HTTP à l'équilibrage de charge de serveur global, la seconde requête DNS HTTP comprenant au moins un nom de domaine d'accélération de service, une adresse de source et une adresse de destination, l'adresse de source étant une adresse IP de la passerelle de cloud en périphérie, et l'adresse de destination étant une adresse IP de l'équilibrage de charge de serveur global ; et
recevoir une première réponse DNS HTTP retournée par l'équilibrage de charge de serveur global, la première réponse DNS HTTP comprenant au moins la VIP d'application en périphérie, la VIP d'application en périphérie étant déterminée par l'équilibrage de charge de serveur global sur la base de l'adresse IP de la passerelle de cloud en périphérie et du nom de domaine d'accélération de service, et
dans un cas où les informations de port de protocole dans la requête de nom de domaine satisfont à l'exigence de port de protocole prédéfinie, ou l'adresse de destination dans la requête de nom de domaine est l'adresse IP du GSLB, le module d'obtention est en outre configuré pour :
résoudre, dans un cas où le statut de requête de la requête de nom de domaine représente la requête DNS, la requête de nom de domaine pour obtenir le nom de domaine dans la requête de nom de domaine, et réencapsuler la requête de nom de domaine résolue dans une seconde requête DNS HTTP ; et transmettre la seconde requête DNS HTTP au GSLB.

9. Système pour sélectionner un noeud informatique en périphérie de réseau mobile, comprenant au moins une fonction de plan utilisateur, une passerelle de cloud en périphérie et un équilibrage de charge de serveur global, dans lequel
la fonction de plan utilisateur est configurée pour recevoir une requête de nom de domaine transmise par un terminal, et acheminer la requête de nom de domaine vers la passerelle de cloud en périphérie dans un cas où un nom de domaine dans la requête de nom de domaine est un nom de domaine d'accélération de service prédéfini ou une adresse de destination dans la requête de nom de domaine est une adresse IP de l'équilibrage de charge de serveur global, ou dans un cas où des informations de port de protocole dans la requête de nom de domaine satisfont à une exigence de port de protocole prédéfinie, et
la passerelle de cloud en périphérie est configurée pour :
obtenir, sur la base de la requête de nom de domaine, une IP virtuelle, VIP, d'application en périphérie pour une interconnexion entre des internets virtuels d'application en périphérie à partir de l'équilibrage de charge de serveur global ;
retourner une réponse de nom de domaine à un terminal en utilisant la fonction de plan utilisateur, la réponse de nom de domaine comprenant au moins la VIP d'application en périphérie ;
recevoir une requête de service réacheminée par la fonction de plan utilisateur, la requête de service étant réacheminée par la fonction de plan utilisateur dans un cas où une adresse de destination dans la requête de service transmise par le terminal est la VIP d'application en périphérie ; et
déterminer un serveur de traitement informatique en périphérie de réseau mobile, MEC, sur la base de la requête de service et d'une politique de routage prédéfinie, et router la requête de service vers le serveur de traitement MEC,
la passerelle de cloud en périphérie est en outre configurée pour :
enregistrer un statut de requête de la requête de nom de domaine, le statut de requête représentant une requête DNS ou une première requête DNS HTTP;
transmettre, sur la base de la requête de nom de domaine, une seconde requête DNS HTTP à l'équilibrage de charge de serveur global, la seconde requête DNS HTTP comprenant au moins un nom de domaine d'accélération de service, une adresse de source et une adresse de destination, l'adresse de source étant une adresse IP de la passerelle de cloud en périphérie, et l'adresse de destination étant une adresse IP de l'équilibrage de charge de serveur global ; et
recevoir une première réponse DNS HTTP retournée par l'équilibrage de charge de serveur global, la première réponse DNS HTTP comprenant au moins la VIP d'application en périphérie, la VIP d'application en périphérie étant déterminée par l'équilibrage de charge de serveur global sur la base de l'adresse IP de la passerelle de cloud en périphérie et du nom de domaine d'accélération de service,
dans lequel dans un cas où les informations de port de protocole dans la requête de nom de domaine satisfont à l'exigence de port de protocole prédéfinie, ou l'adresse de destination dans la requête de nom de domaine est l'adresse IP de l'équilibrage de charge de serveur global, la passerelle de cloud en périphérie transmettant, sur la base de la requête de nom de domaine, une seconde requête DNS HTTP à l'équilibrage de charge de serveur global comprend :
la résolution, dans un cas où le statut de requête de la requête de nom de domaine représente la requête DNS, de la requête de nom de domaine pour obtenir le nom de domaine dans la requête de nom de domaine, et la réencapsulation de la requête de nom de domaine résolue dans une seconde requête DNS HTTP ; et
la transmission de la seconde requête DNS HTTP à l'équilibrage de charge de serveur global.

10. Support de stockage lisible par ordinateur, stockant un programme d'ordinateur, le programme d'ordinateur étant configuré pour réaliser le procédé selon l'une quelconque des revendications 1 à 7.

11. Produit programme d'ordinateur comprenant des instructions, les instructions, lorsqu'elles sont exécutées sur un ordinateur, amenant l'ordinateur à réaliser le procédé selon l'une quelconque des revendications 1 à 7.
